# EUROPEAN PATENT APPLICATION

(11) **EP 1 553 006 A1**
(43) Date of publication of application: **13.07.2005**
(21) Application number: 03792762.1
(22) Date of filing: 21.08.2003
(51) Int. Cl.: B62D 5/04, F16H 7/18

(54) **ELECTRIC POWER STEERING DEVICE**

(30) Priority: 22.08.2002 JP 2002242520; 29.08.2002 JP 2002251286; 05.09.2002 JP 2002259986; 13.09.2002 JP 2002268845
(71) Applicant: NSK LTD.,, Shinagawa-ku, Tokyo 141-8560 (JP)
(72) Inventor: Chikaraishi, Kazuo, Maebashi-shi, Gunma 371-0853 (JP)
(74) Representative: Baldwin, Mark
(86) International application number: PCT/JP2003/010555
(87) International publication number: WO 2004/018279

(57) **Abstract**

In a rack assist type electric power steering apparatus which is provided with a ball screw mechanism having a rack shaft and a ball nut, the ball screw mechanism supporting the rack shaft in such a way that the rack shaft can be moved in the axial direction by rotation of the ball nut, a drive pulley rotating integrally with the shaft of an electric motor for power aid, a driven pulley rotating integrally with said ball nut and a belt looped around the drive pulley and the driven pulley, adjustment of the tension of the belt can be effected appropriately and easily.

## Description

### Technical Field

The present invention relates to a rack assist type electric power steering apparatus in which a belt type power transmission mechanism is employed.

### Background Art

In the steering system of vehicles, so-called power steering apparatuses for assisting the steering operation by means of an external power source are widely used. Conventionally, vane type hydraulic pumps have been used as the power source of the power steering apparatuses. In many cases, the hydraulic pump is driven by the engine. However, this type of power steering apparatus suffers from large engine driving loss (as much as several or ten horsepower in the maximum load state) due to constant driving of the hydraulic pump. Therefore, it is difficult to use this type of power steering apparatus in minisized motor vehicle with a small engine displacement, and even in the case of vehicles with a relatively large displacement, a considerable decrease in gas mileage is inevitable.

In view of the above situation, an electric power steering apparatus (Electric Power Steering, which will be referred to as EPS) that uses an electric motor as the power source has been getting attention in these years as a solution for the above-described problems. The EPS has advantageous features, such as: it does not suffers from direct engine driving loss since an in-vehicle battery is used as the power source for the electric motor; a decrease in gas mileage can be avoided since the electric motor is activated only upon assisting steering; and electric control thereof is quite easy.

In the meanwhile, the current mainstream of the steering gear for vehicles is the rack and pinion type steering gear because of its high rigidity and light weight or other reasons. As an EPS for the rack and pinion type steering gear, a ball screw rack assist type EPS that drives a rack shaft by means of an electric ball screw mechanism is used as well as a column assist type EPS in which the electric motor is disposed on the column side so as to drive the steering shaft or the pinion itself. In the ball screw rack assist type EPS (which will be simply referred to as the rack assist type EPS), since the assisting force does not act on the engaging surfaces of the pinion and the rack, the contact surface pressure between those members, which can cause friction or deformation, is relatively small.

In the rack assist type EPS, the male thread groove of the ball screw shaft formed on the rack shaft engages with the female thread groove formed on the ball nut through a number of circulating balls (steel balls), and the ball nut is rotationally driven by an electric motor disposed coaxially or non-coaxially with the rack shaft, so that the rack shaft is moved in the axial direction. As a power transmission system between the electric motor and the ball nut in the no-coaxial rack assist type EPS, a gear system disclosed in Japanese Patent No. 3062852 or a belt system, which is advantageous in quietness and transmission efficiency, is used.

In conventional non-coaxial rack assist type EPSs using a belt, as described in Japanese Utility Model Application Laid-Open No. 60-122274 or Japanese Utility Model Publication 4-28538, the power transmission mechanism includes a drive pulley, a driven pulley and a belt looped around the two pulleys. It is important that an appropriate tension is given to the belt. When the drive pulley starts to rotate, a driving force is transmitted to the driven pulley (or the ball nut) by means of the belt, whereby a tensile force is exerted on the driving side web (the tensioned side web) of the belt due to drive resistance while the non-driving side web (the not-tensioned side web) is loosened. If this looseness exceeds a certain degree, slippage will occur between the belt and the pulleys in the case that the belt is a V-belt or a flat belt, or tooth skip will occur between the belt and the pulleys, so that power will not be transmitted appropriately and damages such as burning or tooth drop will occur in the belt.

A general method of giving a tension to the belt is to provide a tensioner mechanism in the belt housing thereby pressing a tension pulley against the non-tension side web with a biasing force of a coil spring or a hydraulic force. However, in the case of the power transmission mechanism of the EPS, since the rotation direction of the drive pulley changes depending on the steering direction changed by the driver, if the tension pulley is pressed against the tension side web, the tension pulley will be moved back by the tension of the tension side web to cause a delay in power transmission to the driven pulley. This causes the problem that steering assist cannot be effected smoothly. This disadvantage also occurs in the case that tensioners are provided on both sides of the belt since the tension pulleys are moved back due to the tension of the tension side web.

### Disclosure of the Invention

The present invention has been made in view of the above-described situation. An object of the present invention is to provide a rack assist type electric power steering apparatus in which tension adjustment of a belt in the power transmission mechanism can be carried out appropriately and easily.

To achieve the above object, according to a first aspect of the present invention, there is provided a rack assist type electric power steering apparatus comprising a ball screw mechanism including a ball nut having a female thread groove formed on its inner circumferential surface, a rack shaft disposed at the central axis of the ball nut and having a male thread groove that is opposed to said female thread groove, formed on its outer circumferential surface and a plurality of circulating balls disposed between said female thread groove and said male thread groove, an electric motor disposed non-coaxially with said rack shaft for driving said ball nut mechanism, power transmission means including a drive pulley rotating integrally with the shaft of the electric motor, a driven pulley rotating integrally with said ball nut and a belt looped around the drive pulley and the driven pulley, and a steering gear case for accommodating said power transmission means and said ball screw mechanism, wherein said electric power steering apparatus is provided with a motor flange fixed to an end portion of said electric motor and having a cylindrical shape to be fitted inside a motor holding bore formed in said steering gear case, and said motor flange rotatably supports said drive pulley and is adapted to rotate relative to said motor holding bore within a certain angle range, and the central axis of the motor flange is offset from the central axis of said electric motor.

According to the first aspect of the present invention, for example, after power transmission means is assembled, the motor flange is rotated while measuring the tension of the belt by means of a tension meter, and when a proper initial tension is attained, the motor flange is secured to the steering case.

In the electric power steering apparatus according to the first aspect of the present invention, a belt retaining flange may preferably be formed on at least one of said drive pulley and said driven pulley. In this case, axial displacement of the belt during running is regulated, and smooth power transmission can be realized.

In the electric power steering apparatus according to first aspect of the present invention, said motor flange may preferably be separated into two parts along the axial direction. With this feature, assembling of the drive pulley and the belt into the motor flange can be made easy.

In the electric power steering apparatus according to the first aspect of the present invention, said motor flange may preferably be provided with a belt accommodating portion for accommodating the belt in a folded state during an assembling operation. In this case, with use of a subassembly in which the drive pulley and the belt are assembled to the motor flange in advance, the operation required after attachment to the steering gear case is greatly simplified, and reduction of the number of assembling steps is realized.

In the electric power steering apparatus according to the first aspect of the present invention, said motor holding bore may preferably annexed with a belt passing portion for allowing the belt projecting from the belt accommodating portion to pass through. With this feature, when the motor flange is assembled to the steering gear case, the belt projecting from the motor flange will not interfere with the steering gear case.

In the electric power steering apparatus according to the present invention, the belt accommodated in said belt accommodating portion may preferably be folded in a state in which the belt is prevented from assuming a curvature smaller than a predetermined curvature by curvature regulation means. With this feature, break of reinforcing fibers of the belt due to bending with excessively small curvatures can be prevented.

In the electric power steering apparatus according to the first aspect of the present invention, it is preferable that a power transmission means accommodating portion for accommodating said power transmission means and a ball screw mechanism accommodating portion for accommodating said ball screw mechanism be isolated by isolation means, and said belt be supported by a closed rolling bearing. With this structure, lubricant for lubricating the ball screw mechanism or bearings will not attach to the belt of the power transmission means, and deterioration of the synthetic rubber constituting the belt due to swelling etc. can be prevented.

According to a second aspect of the present invention, there is provided a rack assist type electric power steering apparatus comprising a ball screw mechanism including a ball nut having a female thread groove formed on its inner circumferential surface, a rack shaft disposed at the central axis of the ball nut and having a male thread groove that is opposed to said female thread groove, formed on its outer circumferential surface and a plurality of circulating balls disposed between said female thread groove and said male thread groove, an electric motor disposed non-coaxially with said rack shaft for driving said ball screw mechanism, power transmission means including a drive pulley connected to the shaft of the electric motor, a driven pulley rotating integrally with said ball nut and a belt looped around the drive pulley and the driven pulley, and a steering gear case for accommodating said ball screw mechanism and said power transmission means, wherein said electric power steering apparatus is provided with tension adjusting means for adjusting the tension of said belt, and said tension adjusting means includes a pulley holder rotatably supporting said drive pulley and held in said steering gear case in a swingable manner and holder angle adjusting means for adjusting the swing angle of said pulley holder.

According to the second aspect of the present invention, by changing the swing angle of the pulley holder by the holder angle adjusting means, the distance between the center of the drive pulley and the center of the driven pulley can be changed to give a desired tension to the belt.

In the electric power steering apparatus according to the second aspect of the present invention, said holder angle adjusting means may preferably comprise a screw mechanism. In this case, the tension adjustment can be effected in a stepless manner finely, and displacement of the roller holder after tension adjustment is unlikely to occur.

In the electric power steering apparatus according to the second aspect of the present invention, the shaft of said electric motor and said drive pulley may preferably be connected by misalignment absorbing means. In this case, even if, for example, misalignment of the shaft of the electric motor and the drive pulley occurs upon tension adjustment, the misalignment is absorbed by the misalignment absorbing means. Therefore, the electric motor may be fixed to the steering gear case in advance.

In the electric power steering apparatus according to the second aspect of the present invention, said misalignment absorbing means may preferably be an Oldham coupling. In this case, even if misalignment of the shaft of the electric motor and the drive pulley occurs, power transmission from the electric motor to the drive pulley is achieved without a significant transmission loss.

In the electric power steering apparatus according to the second aspect of the present invention, a belt retaining flange may preferably be formed on at least one of said drive pulley and said driven pulley. In this case, axial displacement of the belt during running is regulated, and smooth power transmission can be realized.

In the electric power steering apparatus according to the second aspect of the present invention, said steering gear case may preferably include a belt housing for accommodating said power transmission means and a ball screw housing secured to said belt housing for accommodating said ball screw mechanism, and said driven pulley and said ball nut may be spline connected. In this case, the adjustment of the tension of the belt can be effected in the state in which the ball screw housing has not been secured, and the driven pulley and the ball nut can be connected easily upon securing the belt housing and the ball screw housing.

In the electric power steering apparatus according to the second aspect of the present invention, a power transmission means accommodating portion for accommodating said power transmission means and a ball screw mechanism accommodating portion for accommodating said ball screw mechanism may preferably be isolated by isolation means, and said belt may be supported by a closed rolling bearing. In this case, lubricant for lubricating the ball screw mechanism or bearings will not attach to the belt of the power transmission means, and deterioration of the synthetic rubber constituting the belt due to swelling etc. can be prevented.

According to a third aspect of the present invention, there is provided a rack assist type electric power steering apparatus comprising, a ball screw mechanism including a ball nut having a female thread groove formed on its inner circumferential surface, a rack shaft disposed at the central axis of the ball nut and having a male thread groove that is opposed to said female thread groove, formed on its outer circumferential surface and a plurality of circulating balls disposed between said female thread groove and said male thread groove, an electric motor disposed non-coaxially with said rack shaft for driving said ball nut mechanism, power transmission means including a drive pulley rotating integrally with the shaft of the electric motor, a driven pulley rotating integrally with said ball nut and a belt looped around the drive pulley and the driven pulley, and a steering gear case for accommodating said ball screw mechanism and said power transmission means, wherein said electric power steering apparatus further comprises tension adjusting means for adjusting the tension of said belt, and said steering gear case includes a belt housing for accommodating said power transmission means and a ball screw housing secured to said belt housing for accommodating said ball screw mechanism.

According to the third aspect of the present invention, in the state in which the ball screw housing is not secured, the tension of the belt is estimated based on the drive resistance of the drive pulley or the driven pulley while operating the tension adjusting means, and after completion of the tension adjustment, the belt housing and the ball screw housing are secured together to assemble the steering gear.

In the electric power steering apparatus according to the third aspect of the present invention, said driven pulley and said ball nut may preferably be spline connected. With this feature, the connection of the driven pulley and the ball nut can be achieved easily upon securing the belt housing and the ball screw housing together.

In the electric power steering apparatus according to the third aspect of the present invention, a belt retaining flange may preferably be formed on at leas one of said drive pulley and said driven pulley. With this feature, axial displacement of the belt during running is regulated, and smooth power transmission can be realized.

In the electric power steering apparatus according to the third aspect of the present invention, the tension of said belt may preferably be measured based on the running torque of said drive pulley or said driven pulley.

In the electric power steering apparatus according to the third aspect of the present invention, said tension adjusting means may be adapted to change the distance between the center of said drive pulley and the center of said driven pulley. With this feature, the tension of the belt is adjusted by changing the distance between the center of the pulleys by, for example, moving the drive pulley toward or away from the driven pulley using an eccentric shaft.

In the electric power steering apparatus according to according to the third aspect of the present invention, a power transmission means accommodating portion for accommodating said power transmission means and a ball screw mechanism accommodating portion for accommodating said ball screw mechanism may preferably be isolated by isolation means, and said belt may be supported by a closed rolling bearing. In this case, lubricant for lubricating the ball screw mechanism or bearings will not attach to the belt of the power transmission means, and deterioration of the synthetic rubber constituting the belt due to swelling etc. can be prevented.

According to a fourth aspect of the present invention, there is provided a rack assist type electric power steering apparatus comprising a ball screw mechanism including a ball nut having a female thread groove formed on its inner circumferential surface, a rack shaft disposed at the central axis of the ball nut and having a male thread groove that is opposed to said female thread groove, formed on its outer circumferential surface and a plurality of circulating balls disposed between said female thread groove and said male thread groove, an electric motor disposed non-coaxially with said rack shaft for driving said ball nut mechanism, power transmission means including a drive pulley rotating integrally with the shaft of the electric motor, a driven pulley rotating integrally with said ball nut and a belt looped around the drive pulley and the driven pulley, and a steering gear case for accommodating said ball screw mechanism and said power transmission means, wherein said electric power steering apparatus further comprises tension adjusting means for adjusting the tension of said belt, and said tension adjusting means includes a tension roller rotatably held by a roller holder disposed outside said belt, said tension roller being adapted to be moved back and forth relative to a web surface of said belt together with said roller holder, and a roller pressing means for pressing said tension roller against said belt.

According to the fourth aspect of the present invention, when the tension roller is pressed against the outer side of the belt, the wrapping angle of the belt on the pulleys is increased, so that the shear stress of the belt at the side of the pulley having the smaller diameter is reduced.

In the electric power steering apparatus according to the fourth aspect of the present invention, said roller holder may preferably be adapted to swing about a swing shaft as a supporting point. With this feature, by changing the positional relationship between the tension roller, the swing shaft and the roller pressing means, moving amount of the tension roller relative to the drive amount by the roller pressing means can be determined relatively freely.

In the electric power steering apparatus according to the fourth embodiment of the present invention, said roller pressing means may preferably be a screw mechanism. With this feature, the tension adjustment can be effected in a stepless manner finely, and displacement of the roller holder after tension adjustment is unlikely to occur.

In the electric power steering apparatus according to the fourth aspect of the present invention, it is preferable that in the state in which said power transmission means is assembled, a line connecting the center axis of said tension roller and said swing axis be substantially parallel to the side of the web of said belt that is not pressed by said tension roller. With this feature, the moving direction of the tension roller caused by swing of the roller holder becomes substantially perpendicular to the belt, and therefore the tension roller is pressed against the belt effectively with a relatively small swing amount.

In the electric power steering apparatus according to the fourth aspect of the present invention, it is preferable that belt retaining flanges for regulating axial displacement of said belt be formed at both ends of said tension roller, and said tension roller be movable within a predetermined movement range. With this feature, problems such as dislocation of the belt from the tension roller or meandering of the belt due to displacement of the roller holder are prevented.

In the electric power steering apparatus according to the fourth aspect of the present invention, it is preferable that said roller holder be a press formed part. With this feature, weight reduction of the roller holder is achieved and improvement in its productivity is realized.

In the electric power steering apparatus according to the fourth aspect of the present invention, it is preferable that a power transmission means accommodating portion for accommodating said power transmission means and a ball screw mechanism accommodating portion for accommodating said ball screw mechanism be isolated by isolation means, and said belt be supported by a closed rolling bearing. With this feature, bearings will not attach to the belt of the power transmission means, and deterioration of the synthetic rubber constituting the belt due to swelling etc. can be prevented.

As per the above, it is possible to give a proper tension to the belt reliably and easily without using a tensioner or the like, and smooth steering assist and prevention of damages of the timing belt can be realized while reducing the number of components.

### Brief Description of the Drawings

Fig. 1 is a perspective view showing the cabin side of a steering apparatus according to the present invention.
Fig. 2 is a longitudinal cross sectional view showing a steering gear according to a first embodiment of the present invention.
Fig. 3 is an enlarged view showing portion A in Fig. 2.
Fig. 4 is a cross sectional view taken along line B-B in Fig. 3.
Fig. 5 is a cross sectional view taken along line C-C in Fig. 3.
Fig. 6 is an illustrative view showing the operation of the first embodiment.
Fig. 7 is an illustrative view showing the operation of the first embodiment.
Fig. 8 is an illustrative view showing the operation of the first embodiment.
Fig. 9 is an illustrative view showing the operation of the first embodiment.
Fig. 10 is a cross sectional view showing the principal part of a steering gear 11 according to a first modification of the first embodiment.
Fig. 11 is a cross sectional view taken along line D-D in Fig. 10.
Fig. 12 is a cross sectional view taken along line E-E in Fig. 10.
Fig. 13 is a perspective view showing the timing belt accommodation state in the first modification of the first embodiment.
Fig. 14 is a cross sectional view showing how a motor flange is attached in the first modification of the first embodiment.
Fig. 15 is an illustrative view showing the operation of the first modification of the first embodiment.
Fig. 16 is an illustrative view showing the operation of the first modification of the first embodiment.
Fig. 17 is an illustrative view showing the operation of the first modification of the first embodiment.
Fig. 18 is a cross sectional view corresponding to line B-B in Fig. 3 showing a second modification of the first embodiment.
Fig. 19 is a cross sectional view taken along the direction of the shaft of the motor in Fig. 18.
Fig. 20 is an exploded view showing the operation of the second modification of the first embodiment.
Fig. 21 is an illustrative view showing the operation of the second modification of the first embodiment.
Fig. 22 is an illustrative view showing the operation of the second modification of the first embodiment.
Fig. 23 is a longitudinal cross sectional view showing a steering gear according to a second embodiment of the present invention.
Fig. 24 is an enlarged view showing portion A in Fig. 23.
Fig. 25 is a cross sectional view taken along line B-B in Fig. 24.
Fig. 26 is a cross sectional view taken along line C-C in Fig. 24.
Fig. 27 is a cross sectional view taken along line D-D in Fig. 24.
Fig. 28 is a longitudinal cross sectional view showing a steering gear according to a modification of the second embodiment of the present invention.
Fig. 29 is a cross sectional view taken along line E-E in Fig. 28.
Fig. 30 is a cross sectional view taken along line F-F in Fig. 28.
Fig. 31 is a cross sectional view taken along line G-G in Fig. 28.
Fig. 32 is an exploded perspective view showing an Oldham coupling according to a modification of the second embodiment.
Fig. 33 is a longitudinal cross sectional view showing a steering gear according to a third embodiment of the present invention.
Fig. 34 is an enlarged view showing portion A in Fig. 33.
Fig. 35 is a cross sectional view taken along line B-B in Fig. 34.
Fig. 36 is a cross sectional view taken along line C-C in Fig. 34.
Fig. 37 is an illustrative view showing the operation of the third embodiment.
Fig. 38 is an illustrative view showing the operation of the third embodiment.
Fig. 39 is an illustrative view showing the operation of the third embodiment.
Fig. 40 is an illustrative view showing the operation of the third embodiment.
Fig. 41 is a longitudinal cross sectional view showing a steering gear according to a fourth embodiment of the present invention.
Fig. 42 is an enlarged view showing portion A in Fig. 41.
Fig. 43 is a cross sectional view taken along line B-B in Fig. 42.
Fig. 44 is a cross sectional view taken along line C-C in Fig. 43.
Fig. 45 is a cross sectional view taken along line D-D in Fig. 43.
Fig. 46 is a perspective view of a roller holder.
Fig. 47 is a perspective view showing the roller holder.
Fig. 48 is an illustrative view showing the fourth embodiment.

### Embodiments of the Invention

In the following, embodiments of the present invention will be described with reference to the drawings.

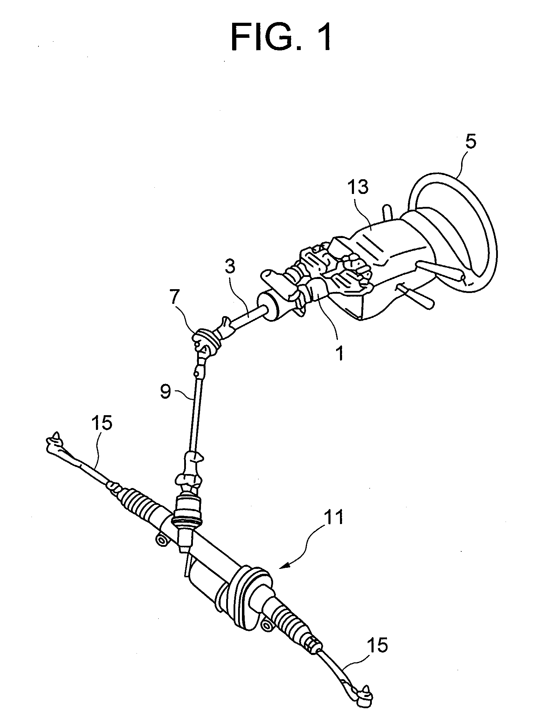

Fig. 1 is a perspective view showing the cabin side portion of an electric power steering apparatus in which an embodiment of the present invention is incorporated. In this drawing, the member designated by reference numeral 1 is a steering column, which rotatably supports an upper steering shaft 3. On the upper end of the steering shaft 3, a steering wheel 5 is attached, and to the lower end, a lower steering shaft 9 is connected by means of a universal joint 7.

Connected to the lower end of the lower steering shaft 9 is a steering gear 11 composed of a rack and pinion mechanism and a power assist mechanism etc.. In Fig. 1, reference sign 13 designates a column cover that covers the steering column 1, and reference sign 15 designates tie rods connected to the right and left ends of the steering gear 11.

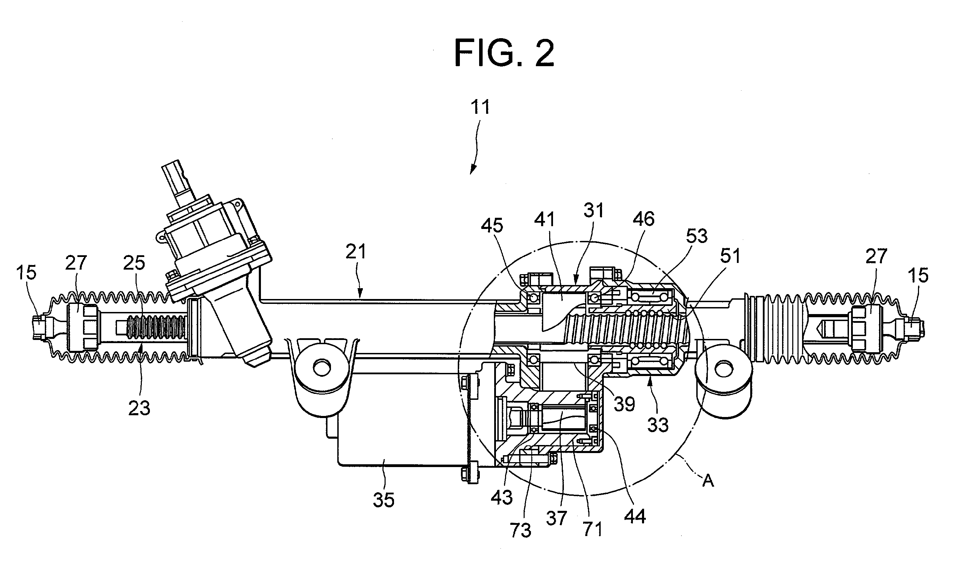

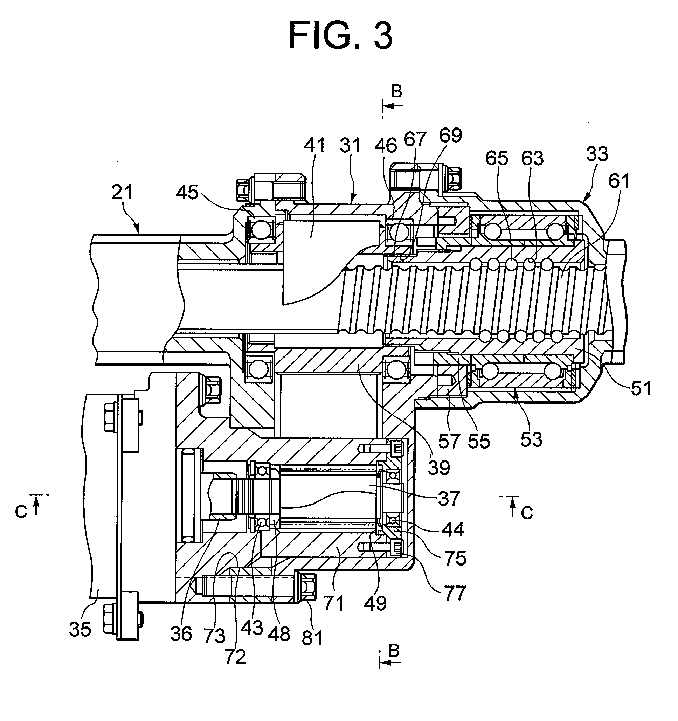

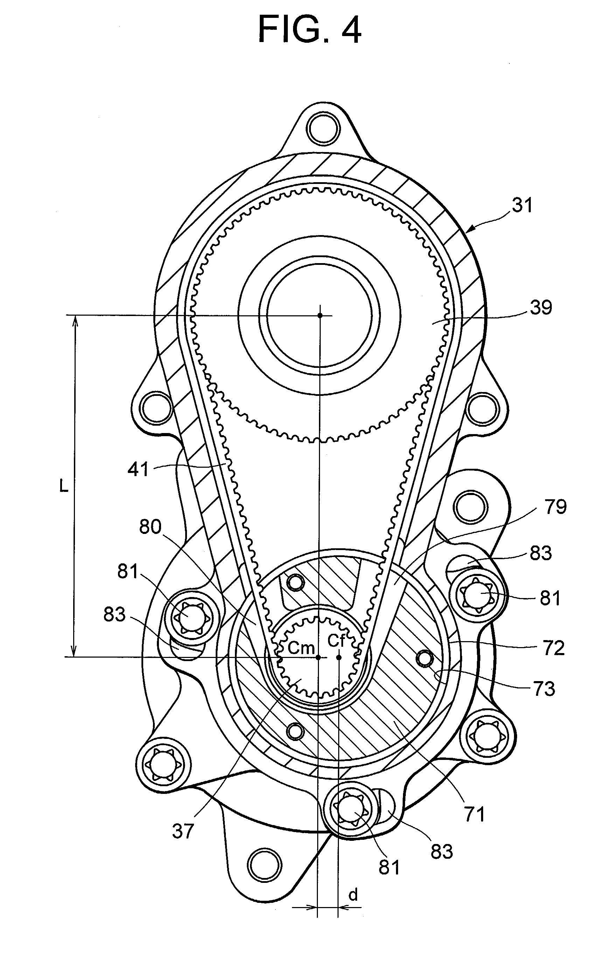

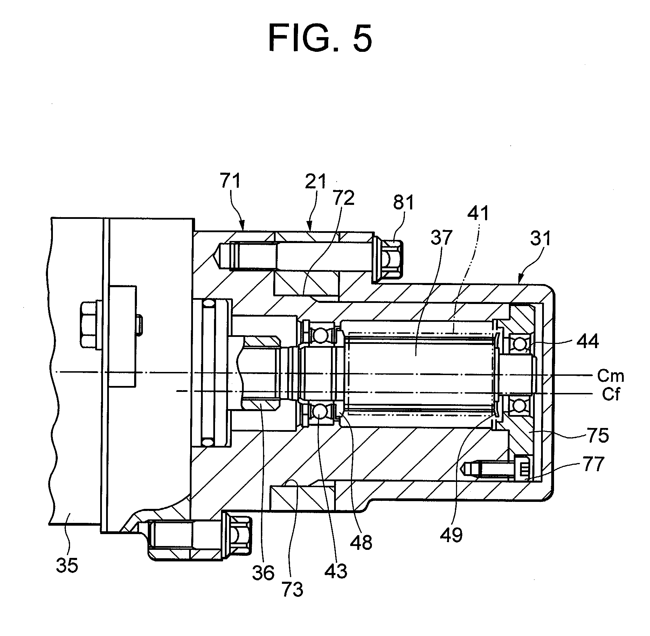

Fig. 2 is a longitudinal cross sectional view showing the steering gear 11 according to the first embodiment of the present invention. Fig. 3 is an enlarged view showing portion A in Fig. 2. Fig. 4 is a cross sectional view taken along line B-B in Fig. 3. Fig. 5 is a cross sectional view taken along line C-C in Fig. 3. The member designated by reference sign 21 in Fig. 2 is a rack and pinion housing that constitutes the steering gear case, which holds a rack shaft 23 and a pinion (not shown) that compose the rack and pinion mechanism. On the rack shaft 23, a rack 25 engaging the pinion is formed in the left side portion in Fig. 2. At the left and right ends (in Fig. 2) of the rack shaft 23, spherical joints 27 that support the tie rods 25 in a swingable manner are secured.

The outer hull of the power assist mechanism is composed of a belt housing 31 secured to the right side (in Figs. 2 and 3) of the rack and pinion housing 21 by bolts and a ball screw housing 33 secured to the right side (in Figs. 2 and 3) of the belt housing 31 by bolts and composing the steering gear case together with the rack and pinion housing 21 and the belt housing 31.

On the lower portion of the belt housing 31, an electric motor 35 is attached. The belt housing 31 accommodates a drive pulley 37 fixed to the shaft 36 of the electric motor 35, a hollow driven pulley 39 connected to a ball nut 51 that will be described later and a timing belt 41 looped around the drive pulley 37 and the driven pulley 39, which constitute a power transmission mechanism. The drive pulley 37 is supported on a motor flange 71 and a flange cover 75 integral with it via prelubricated deep groove ball bearings 43 and 44 (which will be simply referred to as bearing hereinafter) as closed rolling bearings respectively. The driven pulley 39 is supported on the housings 21 and 31 via bearings 45 and 46 respectively. On both ends of the drive pulley 37, belt retaining flanges 48 and 49 are attached. In the case of this embodiment, as will be understood from Fig. 3, the interior space of the belt housing 31 is isolated from the ball screw mechanism and the rack shaft 23 by the driven pulley 39 and the bearings 45, 46 that serve as isolating means.

In the ball screw housing 33, a ball nut 51 is rotatably supported by means of a double row angular ball bearing 53. Reference sign 55 in Figs. 2 and 3 designates a ring nut for fixing the inner ring of the double row angular ball bearing 53 to the ball nut 51, and reference sign 57 designates a ring bolt for fixing the outer ring of the double row angular ball bearing 53 to the ball screw housing 33.

On the rack shaft 23, a male thread groove 61 is formed, while on the ball nut 51, a female thread groove 63 is formed, and a number of steel balls 65 serving as circulating balls are provided between the male thread groove 61 and the female thread groove 63 In addition, a circulation piece (not shown) for circulating the steel balls 65 is attached on the ball nut 51.

On the ball nut 51 side end portion of the driven pulley 39, a female spline 67 is formed, and a male spline 69 engaging the female spline 67 is formed on the ball nut 51. Thus, in the assembled state, the driven pulley 39 and the ball nut 51 rotate together.

At the end portion of the electric motor 35, a motor flange 71 having a substantially cylindrical shape is secured by bolts. The fitting portion 72 of the motor flange 71 is fitted inside a motor holding bore 73 formed in the rack and pinion housing 21. In the case of the first embodiment, the right side end (in Fig. 3) of the motor flange 71 is an open end, on which a flange cover 75 that holds the bearing 44 is secured by bolts 77. As shown in Fig. 4, a belt passing space 79, 80 is formed in the motor flange 71.

The motor flange 71 is secured to the rack and pinion housing 21 and the belt housing 31 by three bolts 81. Since bolt holes 83 formed on the rack pinion housing 21 and the belt housing 31 have an arc shape as shown in Fig. 4, the motor flange 71 can be revolved within a certain angular range relative to the motor holding bore 73. In addition, since the central axis Cf of the motor flange 71 is offset from the central axis Cm of the motor 35 by dimension d, when the angular phase of the motor flange 71 relative to the rack and pinion housing 21 is changed, the distance L between the center of the drive pulley 37 and the center of the driven pulley 39 also changes.

In the following, the operation of the first embodiment will be described.

When the driver turns the steering wheel 5, the rotational force is transmitted to the steering gear 11 via the upper steering shaft 3 and the lower steering shaft 9. Since the rack and pinion mechanism for converting rotational input into linear movement is provided in the steering gear 11, the rack shaft 23 is moved either to the left or right, so that the steering angle of the wheels is changed by means of the right and left tie rods 15 to achieve steering.

Simultaneously, in the power assist mechanism, the electric motor 35 rotates in the forward or backward direction with a predetermined running torque based on an output of a steering torque sensor (not shown). The rotation is transmitted, while reduced, through the drive pulley 37 and the driven pulley 39 to the ball nut 51 that is spline engaging the driven pulley 39. When the ball nut 51 rotates, a thrust force is exerted on the male thread groove 61 of the rack shaft 23 via the steel balls 65 engaging the female thread groove 63 of the ball nut 51. Thus, steering assist is achieved. In connection with this, in this embodiment, since the interior space of the belt housing 31 is isolated from the ball screw mechanism and the rack shaft 23, and the drive pulley 37 and the driven pulley 39 are supported by the prelubricated deep groove ball bearings 43-46, grease or the like for lubricating the ball screw mechanism, the rack shaft 23 and the bearings 43-46 will not fly to attach to the timing belt 41. Therefore, deterioration of the synthetic rubber material of the belt due to swelling can be prevented.

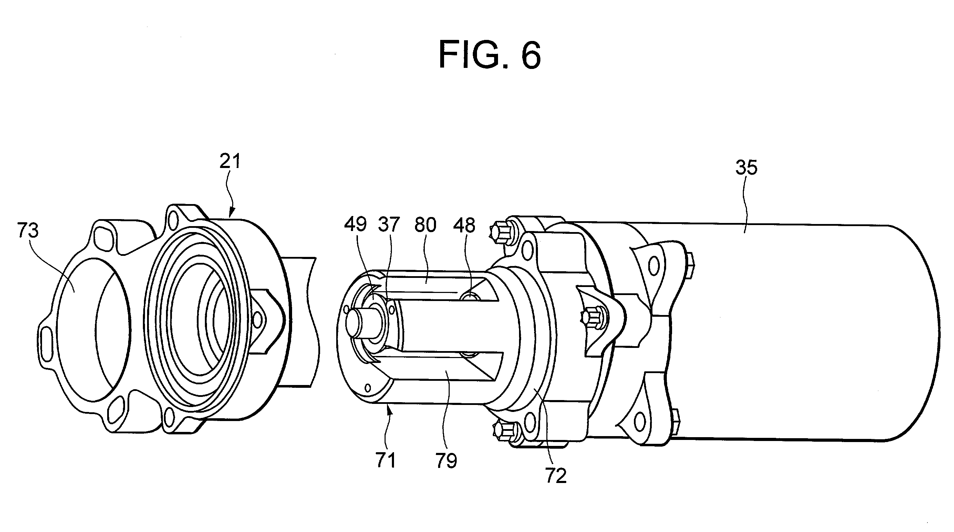

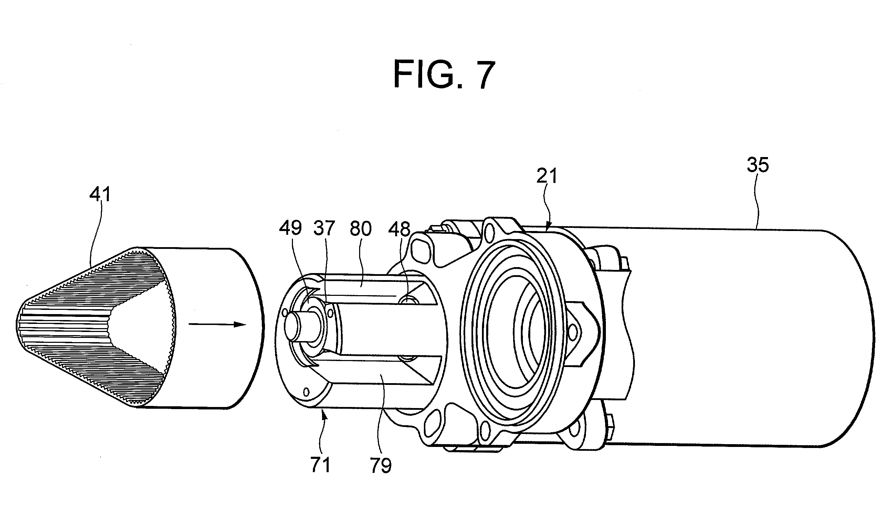

Next, the process of assembling the steering gear 11 and the process of adjusting the tension of the timing belt 41 in the first embodiment will be described. In the assembly process in the first embodiment, as shown in Figs. 6 and 7, the assembly engineer firstly fits the fitting portion 72 of the motor flange 71, on which parts such as the electric motor 35 and drive pulley 37 are attached, into the motor holding bore 73 of the rack and pinion housing 21 from the right in the drawings (from the left, in Figs. 2 and 3).

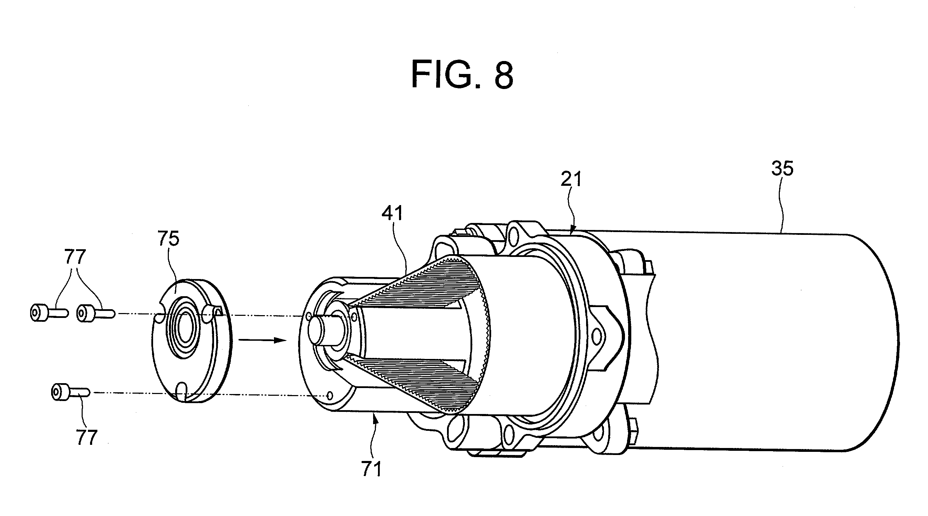

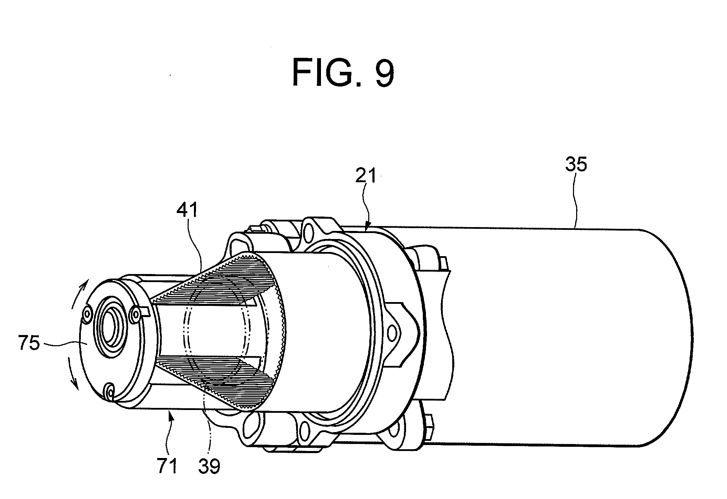

Then, the motor flange 71 projects beyond the rack and pinion housing 21, and so the assembly engineer inserts the timing belt 41 into the belt passing space 79, 80 to set it on the drive pulley 37 as shown in Figs. 7 and 8. Next, as shown in Fig. 9, the assembly engineer secures the flange cover 75 with bolts and assembles the driven pulley 39 and the belt housing 31 (not shown in Fig. 9) to finish provisional assembling of the power transmission mechanism.

Next, the assembly engineer turns the motor flange 71 fitly relative to the rack and pinion housing 21 and the belt housing 31 while measuring the tension of the timing belt 41. When the value of the tension becomes equal to a prescribed value, the assembly engineer maintains the motor flange 71 at that angular phase and secure the motor flange 71 to the rack and pinion housing 21 and the belt housing 31 with the bolts 81. After that, the assembly engineer assembles the rack shaft 23 and the ball screw housing 33 etc. to finish the assembling of the steering gear 11.

With the above-described structure of the first embodiment, an appropriate tension can be given to the timing belt 41 reliably and easily without using a tensioner or the like. Thus, the number of the constituent parts can be reduced, and smooth steering assist and prevention of damages of the timing belt can be realized.

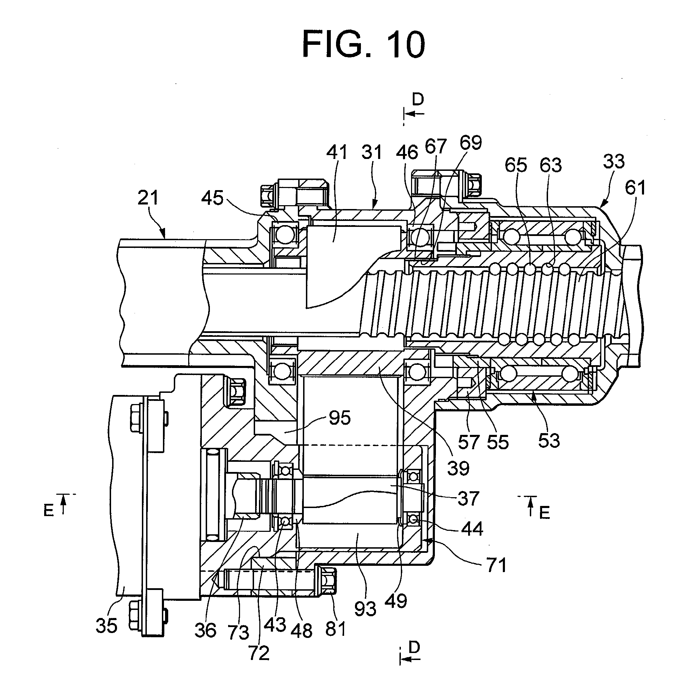

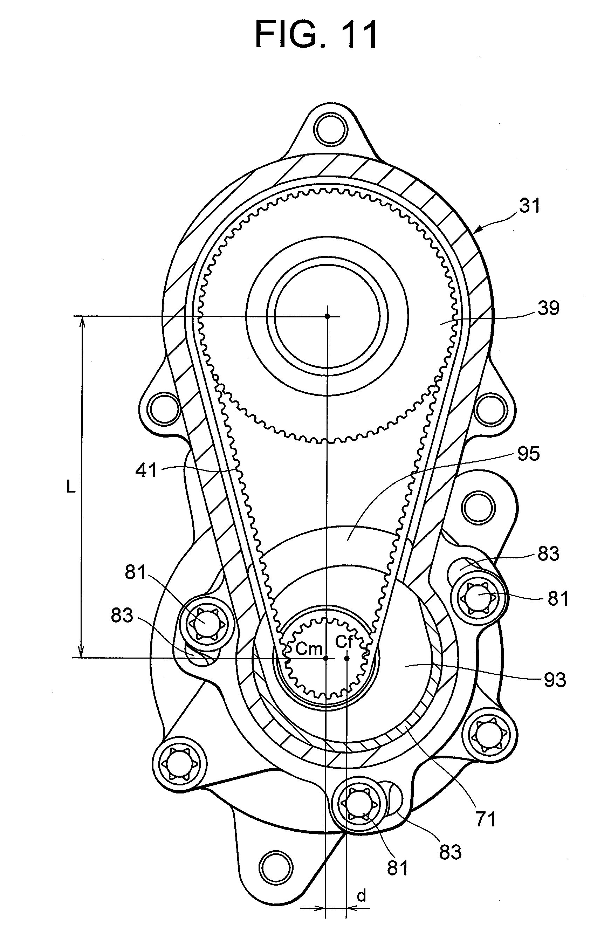

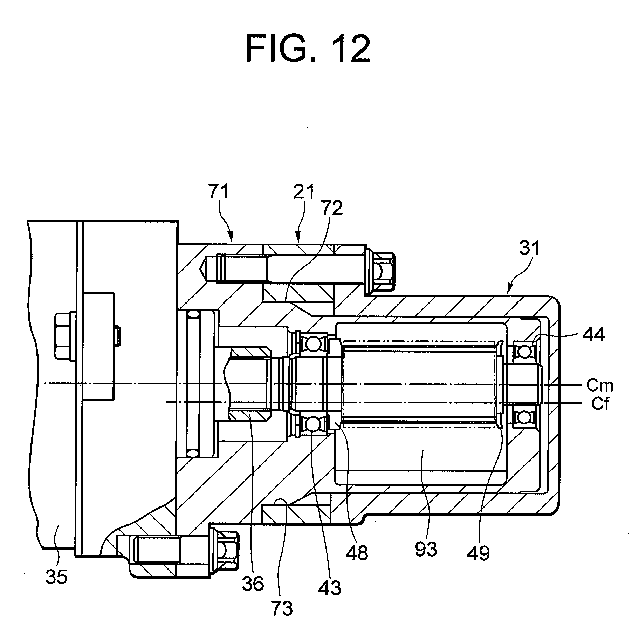

Fig. 10 is a cross sectional view showing the principal portion of a steering gear 11 according to a first modification of the first embodiment of the present invention. Fig. 11 is a cross sectional view taken along line D-D in Fig. 10. Fig. 12 is a cross sectional view taken along line E-E in Fig. 10. The overall structure of the first modification is substantially the same as that of the above-described first embodiment, but differs in the structure of the motor flange or other parts. Specifically, in this embodiment, the motor flange 71 is an integrally formed part without a flange cover, and a relatively large belt accommodating portion 93 is formed in the interior thereof. In addition, a belt passing portion 95 extending toward the driven pulley 39 is annexed to the motor holding bore 73 in the rack and pinion housing 21.

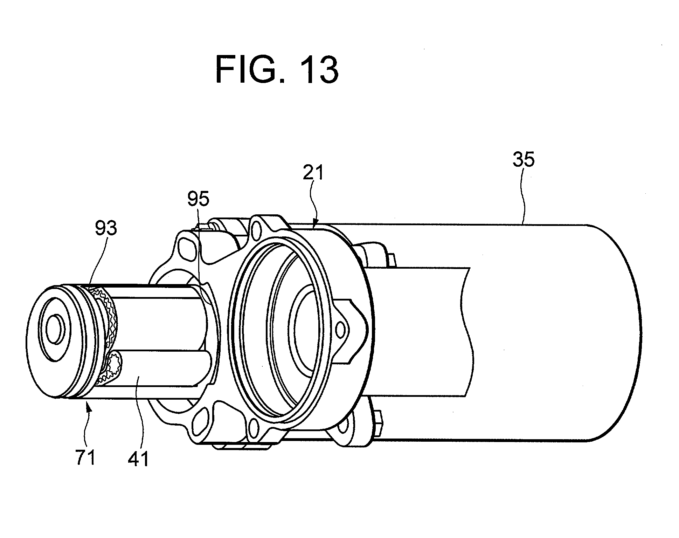

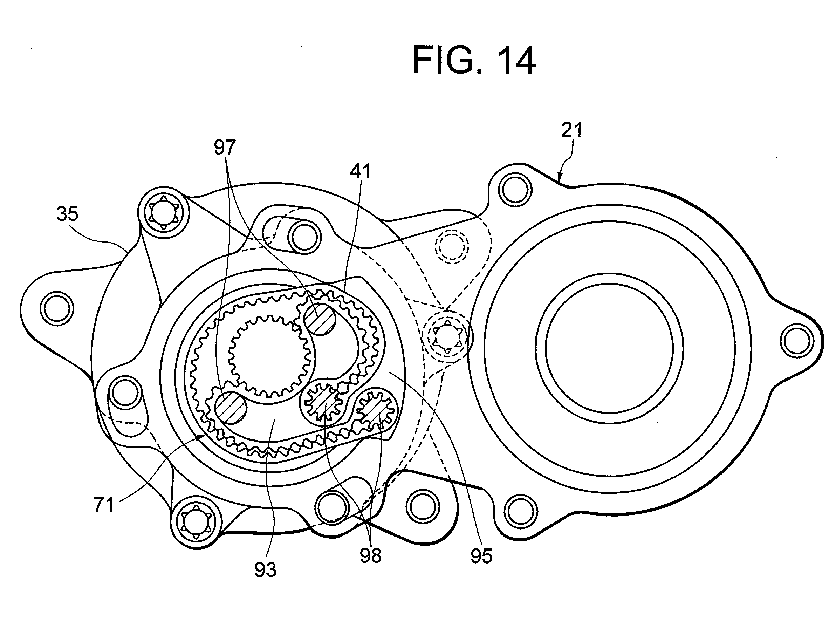

In the case of the first modification, as shown in Fig. 13, the motor flange 71 has been attached with a timing belt 41 in advance when assembled to the rack and pinion housing 21. The timing belt 41 is accommodated in a belt accommodating portion 93 in a folded state, and the timing belt 41 can be prevented from assuming curvature less than a prescribed degree by four curvature regulating pins 97, 98 as shown in Fig. 14. Generally, the timing belt 41 is made of a strength fiber (such as a glass fiber or an alamid fiber) that bears the tension, a synthetic rubber coating and a strengthening nylon fabric, and the strength fiber will not break since the minimum curvature is restricted by the curvature regulating pins 97, 98.

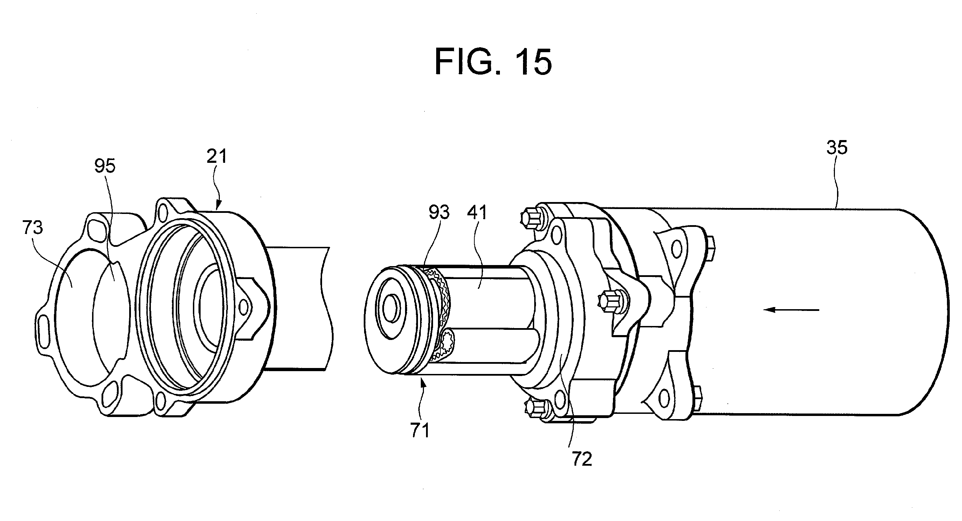

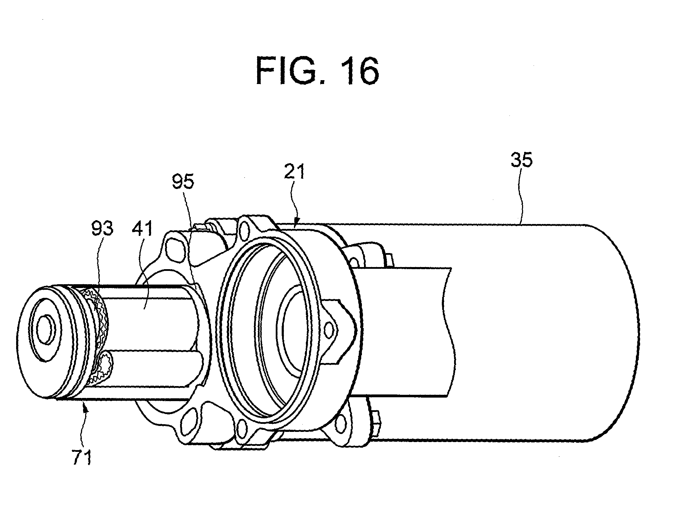

In the following, the operation of the first modification of the first embodiment will be described with reference to Figs. 15 to 17. In the assembling operation of the steering gear 11 in the first modification, the assembly engineer firstly fits the motor flange 71, on which the electric motor 35, the drive pulley 37 and the timing belt 41 etc. are attached, into the motor holding bore 73 of the rack and pinion housing 21 from the right (from the left, in Fig. 10). In this state, although a part of the timing belt 41 projects beyond the motor flange 71, the timing belt 41 will not interfere with the rack and pinion housing 21, since the belt passing portion 95 is annexed to the motor holding bore 73 as shown in Fig. 14.

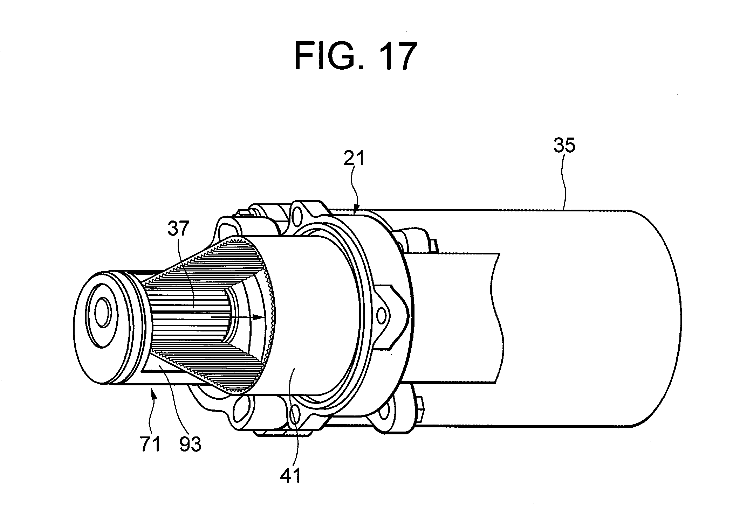

After the motor flange is made to project beyond the motor flange 71, as shown in Fig. 17, the assembly engineer takes the timing belt 41 out from the belt accommodating portion 93 to unfold it and removes the curvature regulating pin 97. Next, the assembly engineer sets the driven pulley 39 (which is not shown in Fig. 9) in accordance with the process same as in the first embodiment to finish provisional assembling of the power transmission mechanism. The other process of assembling the steering gear 11 and the process of adjusting the tension of the timing belt 41 are the same as those in the first embodiment, and so redundant descriptions will be omitted.

With the above-described structure of the first modification of the first embodiment, the need for a flange cover and bolts is eliminated and the number of components is further reduced. In addition, by sub-assembling the timing belt 41 to the motor flange 71, reduction of the number of assembling steps is also realized.

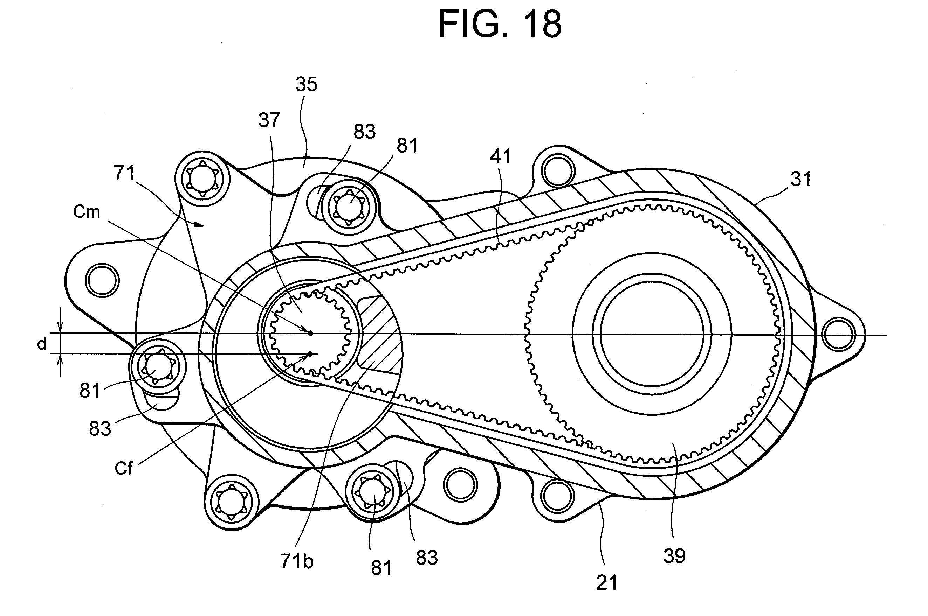

Next, a second modification of the first embodiment will be described with reference to Figs. 18 to 22.

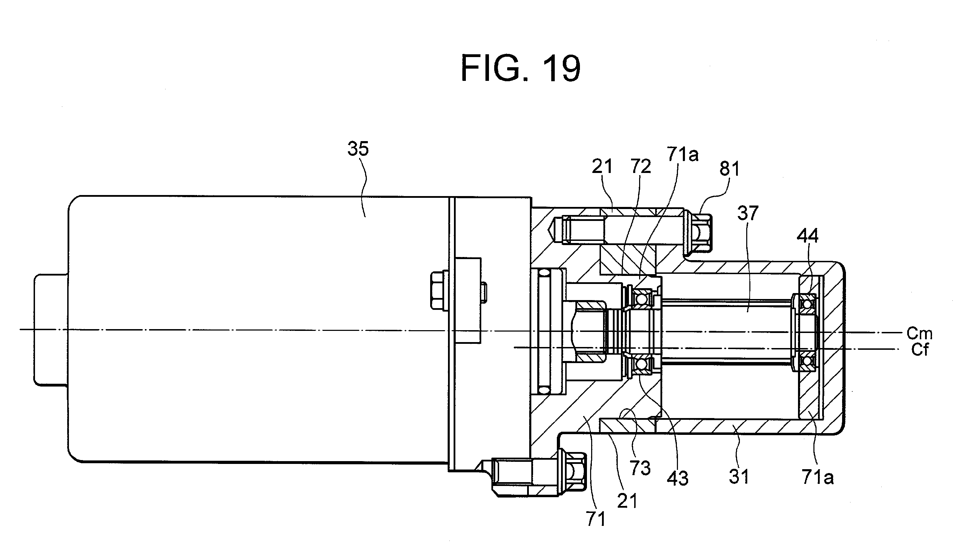

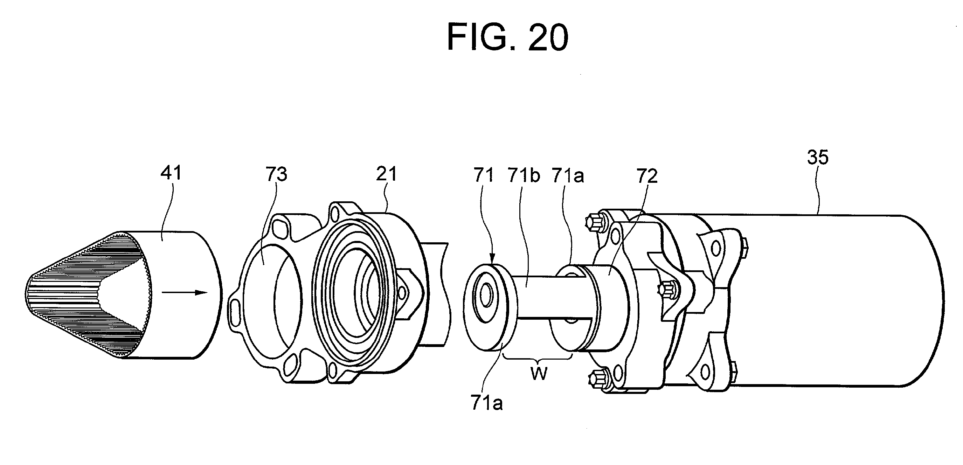

Fig. 18 shows the structure of the second modification in its cross section taken along line B-B in Fig. 3. Fig. 19 is a cross sectional view taken in the direction of the driving shaft of the motor in Fig. 18. Figs. 20 to 22 illustrate the operation of the second modification.

The second modification is substantially the same as the first embodiment, and the same parts are designated by the same reference numerals and redundant descriptions will be omitted. The process of attaching the timing belt after fixing the motor flange 71 to the electric motor 35 is the same; what is different is that bearing support portions 71a at both ends of the drive pulley 37 are made as an integral structure by connecting them with an arm portion 71b extending through the internal space of the timing belt 41.

As shown in Figs. 18 and 19, a motor flange 71 is secured to the end portion of the motor 35 with bolts. The motor holding bore 73 formed in the rack and pinion housing 21 is externally fitted over the fitting portion of the motor flange 71.

As shown in Figs. 19 and 20, the motor flange 71 is constructed in such a way that the two bearing support portions for holding the bearings 43 and 44 that bear both axial end portions of the drive pulley 37 are connected by the arm portion 71b that extends in the axial direction. These portions are integrally formed. As per the above, the portion on which the timing belt 41 is wrapped has a large opening W, and therefore the timing belt 41 can be attached from the outside in the state in which the drive pulley 37 is assembled to the motor flange 71.

As shown in Fig. 19, the outer circumference of the two bearing support portions 71a for holding bearings 43 and 44 that bear both end portions of the drive pulley 37 is internally fitted to inner circumference of the belt housing 31. Thus, forces acting on the rotation shaft of both the pulleys that bias them toward each other, such as the initial tension given to the timing belt 41 or the tension generated through power transmission, are directly borne by the motor flange 71 and the belt housing 31 (see Fig. 18 also). However, since the arm portion 71b of the motor flange 71 is disposed on the line connecting the rotation axis of the drive pulley 37 and the rotation axis of the driven pulley 39 (see Fig. 18), no torsional moment is generated in the arm portion 71b by the aforementioned force.

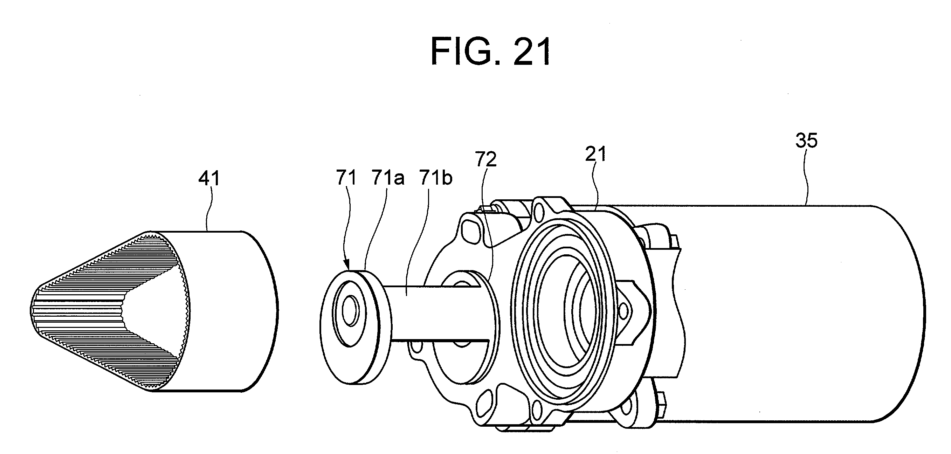

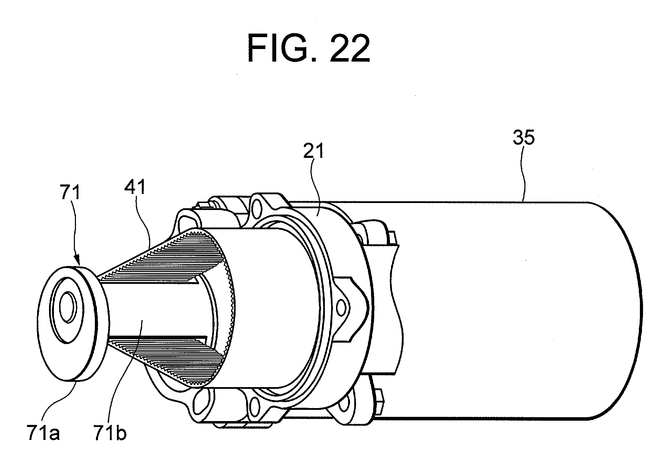

In the above-described structure, as shown in Fig. 21, when the assembly engineer fits the fitting portion 72 of the motor flange 71 into the motor holding bore 73 of the rack and pinion housing 21 in the same manner as in the first embodiment, the motor flange 71 extends beyond the rack and pinion housing 21. In this state, the assembly engineer sets the timing belt 41 on the drive pulley as shown in Fig. 22, assembles the driven pulley 39 (see Fig. 18), and then sets the timing belt 41 on the driven pulley 39. Finally, the assembly engineer assembles the belt housing 31.

As per the above, the process of setting the timing belt 41 on the drive pulley 37 is the same as the first embodiment, but since the bearing support portions 71a at both ends of the drive pulley 37 are integrally composed as a part of the motor flange 71, the number of the constituent parts and the number of the steps of the assembling operation can be reduced. This contributes to cost reduction.

While in the first embodiment, the belt space 79, 80 is provided for allowing a space from the outer periphery of the drive pulley 37, this modification has a more simple structure in which only the arm portion 71b is provided. Therefore, the outer diameter of the motor flange 71 (the bearing support portion 71a) can be made smaller. This contributes to downsizing.

Furthermore, while in the first modification, a space for accommodating the belt is provided in the motor flange 71, such a space is not necessary in this modification. This also contributes to downsizing of the motor flange 71.

As described above, according to the first embodiment of the present invention, it is possible to give an appropriate tension to the belt reliably and easily without using a tensioner or the like. Thus, the number of the constituent parts can be reduced, and smooth steering assist and prevention of damages of the timing belt can be realized.

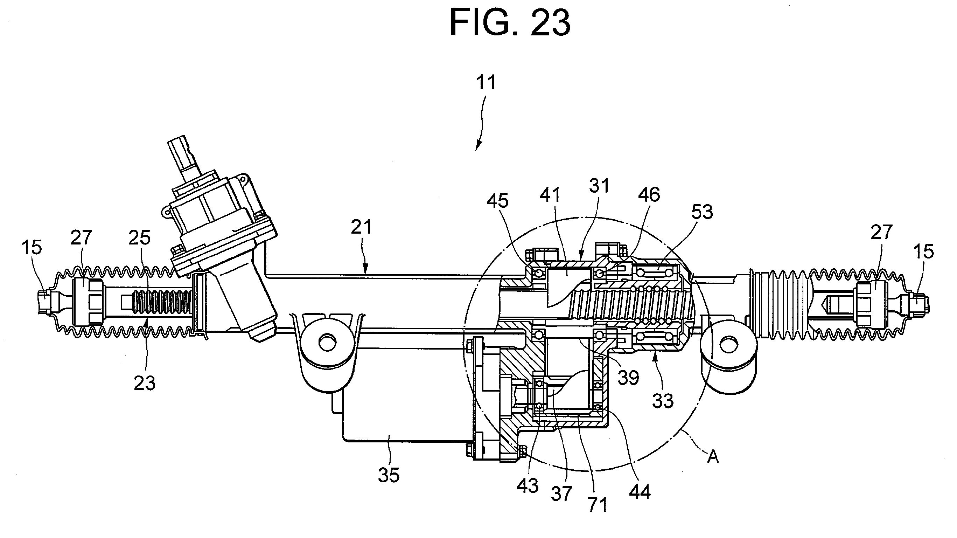

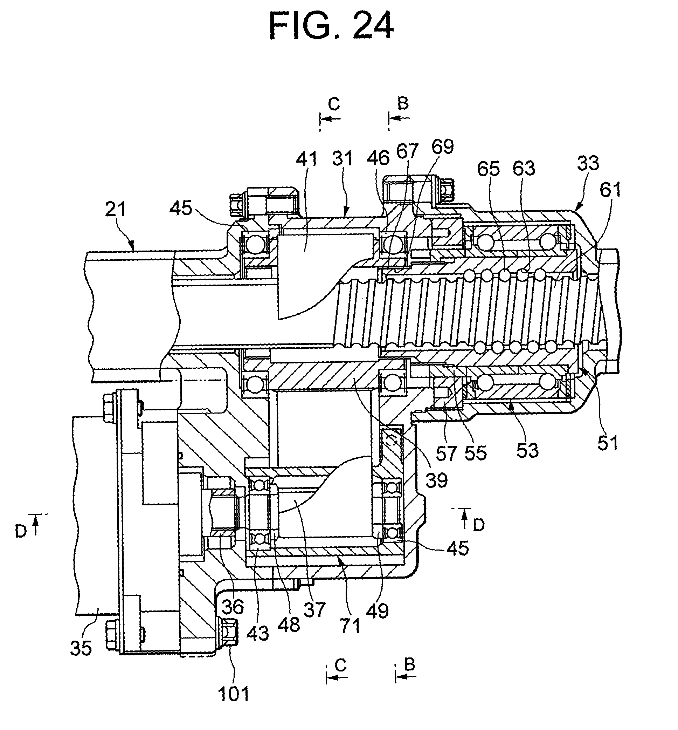

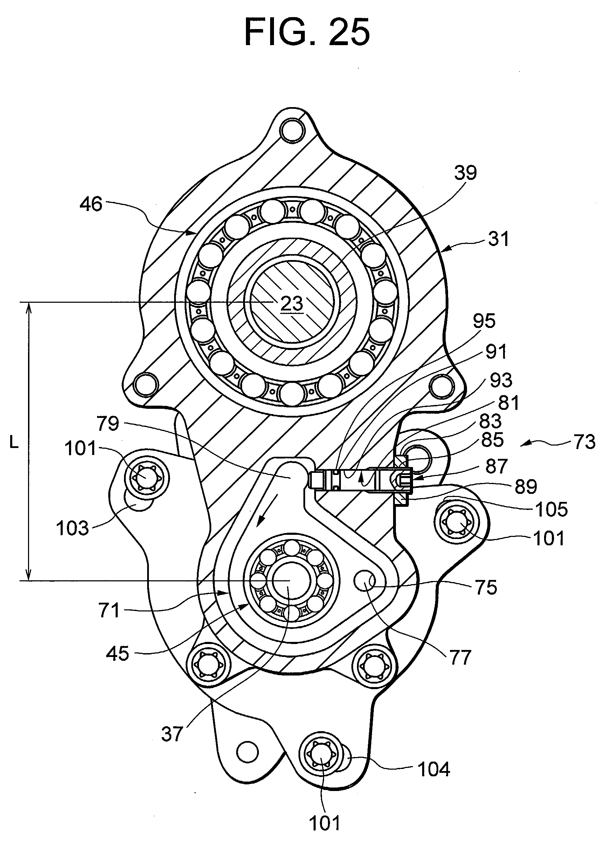

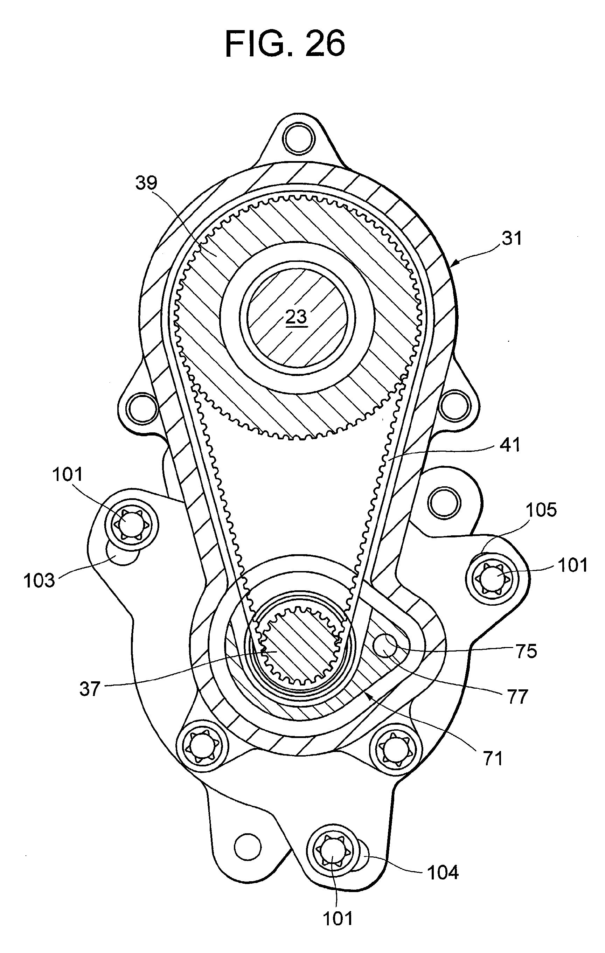

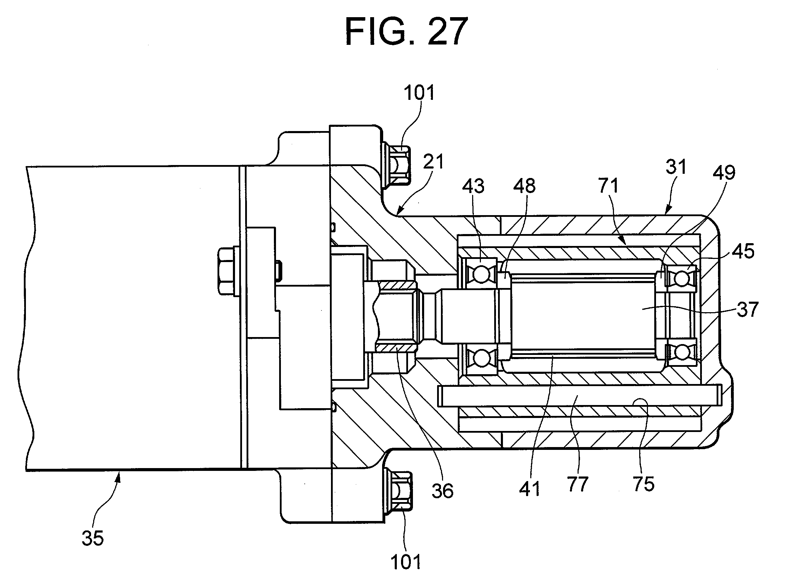

Fig. 23 is a longitudinal cross sectional view showing a steering gear according to a second embodiment of the present invention. Fig. 24 is an enlarged view showing portion A in Fig. 23. Fig. 25 is a cross sectional view taken along line B-B in Fig. 24. Fig. 26 is a cross sectional view taken along line C-C in Fig. 24. Fig. 27 is a cross sectional view taken along line D-D in Fig. 24. The member designated by reference sign 21 in Fig. 23 is a rack and pinion housing that constitutes the steering gear case, which holds a rack shaft 23 and a pinion (not shown) that compose the rack and pinion mechanism. On the rack shaft 23, a rack 25 engaging the pinion is formed in the left side portion in Fig. 23. At the left and right ends (in Fig. 23) of the rack shaft 23, spherical joints 27 that support the tie rods 25 in a swingable manner are secured.

The outer hull of the power assist mechanism is composed of a belt housing 31 secured to the right side (in Figs. 23 and 24) of the rack and pinion housing 21 by bolts and a ball screw housing 33 secured to the right side (in Figs. 23 and 24) of the belt housing 31 by bolts and composing the steering gear case together with the rack and pinion housing 21 and the belt housing 31.

To the lower portion (in Figs. 23 and 24) of the rack and pinion housing 21, an electric motor 35 is attached. The belt housing 31 accommodates a drive pulley 37 connected to the shaft 36 of an electric motor 35, a hollow driven pulley 39 connected to a ball nut 51 that will be described later and a timing belt 41 looped around the drive pulley 37 and the driven pulley 39, which constitute the power transmission mechanism.

The drive pulley 37 is rotatably supported on the housings 21 and 31 via prelubricated deep groove ball bearings (which will be simply referred to as bearings hereinafter) 45, 46 as closed rolling bearings respectively. As shown in Figs. 24 and 25, on both ends of the drive pulley 37, belt retaining flanges 48 and 49 are attached. In the case of the second embodiment, as will be understood from Fig. 24, the interior space of the belt housing 31 is isolated from the ball screw mechanism and the rack shaft 23 by the driven pulley 39 and the bearings 45, 46 that serve as isolating means.

In the ball screw housing 33, the ball nut 51 is rotatably supported by means of a double row angular ball bearing 53. As shown in Figs. 23 and 24, the inner ring of the double row angular ball bearing 53 is fixed to the ball nut 51 by means of a ring nut 55, and the outer ring of the double row angular ball bearing 53 is fixed to a ball screw housing 33 by means of a ring bolt 57.

On the rack shaft 23, a male thread groove 61 is formed, while on the ball nut 51, a female thread groove 63 is formed, and a number of steel balls 65 serving as circulating balls are provided between the male thread groove 61 and the female thread groove 63. In addition, a circulation piece (not shown) for circulating the steel balls 65 is attached on the ball nut 51.

On the ball nut 51 side end portion of the driven pulley 39, a female spline 67 is formed, and a male spline 69 engaging the female spline 67 is formed on the ball nut 51. Thus, in the assembled state, the driven pulley 39 and the ball nut 51 rotate together.

In the second embodiment, as tension adjusting means, there is provided a pulley holder 71 for rotatably holding the drive pulley 37 and a holder angle adjusting mechanism 73 for swinging the pulley holder 71. The pulley holder 71 rotatably supports the drive pulley 37 by means of bearings 43 and 44. In addition, a swing shaft 77 held by the rack and pinion housing 21 and the belt housing 31 is inserted through a through hole 75 of the pulley holder 71. A pulley holder 71 is provided with a lever portion 79 projecting from the belt housing 31 side portion thereof (i.e. the upper portion in Fig. 25). The holder angle adjusting mechanism 73 is disposed on the right side (in Fig. 25) of the pulley holder 71 and composed of an adjust bolt 87 having a male thread portion 85 engaging a female thread portion 83 of an adjust bolt holding hole 81 formed on the belt housing 31 and a lock nut 89 for preventing loosening of the adjust bolt 87. The tip end of the adjust bolt 87 is in contact with the lever portion 79 of the pulley holder 71, and when turned in the tightening direction using a hexagonal wrench or the like, the adjust bolt 87 advances to swing the pulley holder 71. An annular groove 91 is formed on the tip end portion of the adjust bolt 87, in which an O-ring for sealing the shaft to be in pressure contact with a guide portion 93 of the adjust bolt holding hole 81 is fitted.

The electric motor 35 is secured to the rack and pinion housing 21 with three bolts 101. Since the bolt holes 103 to 105 formed on the rack and pinion housing 21 are long holes (or arcuate holes) as shown in Figs. 25 and 26, the electric motor 35 can swing within a certain angle range relative to the swing shaft 77 of the pulley holder 71.

In the following, the operation of the second embodiment will be described.

When the driver turns the steering wheel 5, the rotational force is transmitted to the steering gear 11 via the upper steering shaft 3 and the lower steering shaft 9. Since the rack and pinion mechanism for converting the rotational input into linear movement is provided in the steering gear 11, the rack shaft 23 is moved either to the left or right, so that the steering angle of the wheels is changed by means of the right and left tie rods 15 to achieve steering.

Simultaneously, in the power assist mechanism, the electric motor 35 rotates in the forward or backward direction with a predetermined running torque based on an output of a steering torque sensor (not shown). The rotation is transmitted, while reduced, through the drive pulley 37 and the driven pulley 39 to the ball nut 51 that spline engages the driven pulley 39. When the ball nut 51 rotates, a thrust force is exerted on the male thread groove 61 of the rack shaft 23 via the steel balls 65 engaging the female thread groove 63 of the ball nut 51. Thus, steering assist is achieved. In connection with this, in the second embodiment, since the interior space of the belt housing 31 is isolated from the ball screw mechanism and the rack shaft 23, and the drive pulley 37 and the driven pulley 39 are supported by the prelubricated deep groove ball bearings 43-46, grease or the like for lubricating the ball screw mechanism, the rack shaft 23 and the bearings 43-46 will not fly to attach to the timing belt 41. Therefore, deterioration of the synthetic rubber material of the belt due to swelling can be prevented.

Next, the process of adjusting the tension of the timing belt 41 in the second embodiment will be described. In the second embodiment, the assembly engineer turns the adjust bolt 87 in the tightening direction with a tool such as a hexagonal wrench to swing the pulley holder 71 in the anticlockwise direction in Fig. 25. Then, the drive pulley 37 held by the pulley holder 71 is moved in the direction away from the driven pulley 39, so that the distance of the center of the pulley 37 and the center of the pulley 39 changes, whereby a tension is given to the timing belt 41. During this process, the bolt 101 for securing the electric motor 35 is in the loosened state, and therefore the electric motor 35 is also swung with the swinging of the pulley holder 71 (or the drive pulley 37).

After confirming that the tension of the timing belt 41 has become a proper value based on the tightening torque of the adjust bolt 87, the assembly engineer tightens the lock nut 89 to prevent loosening of the adjust bolt 87. After completion of the tension adjustment, the assembly engineer tightens the bolt 101 to secure the electric motor 35 to the rack and pinion housing 21.

Next, the assembling engineer secures the ball screw housing 33 to the belt housing 31 to finish the assembling operation of the steering gear 11. In connection with the above, members such as the rack shaft 23 and the ball nut 51 have been assembled to the ball screw housing 33 in advance in a different assembly line, and when the ball screw housing 33 is connected with the belt housing 31, the female spline 67 of the driven pulley 39 comes into engagement with the male spline 69 of the ball nut 51.

With the above-described structure of the second embodiment, the operation of adjusting the tension of the timing belt 41 can be made accurate and easy. In addition, since the power transmission mechanism and the ball screw mechanism can be assembled and adjusted independently from each other, the assembly process of the steering gear 11 can be made easy.

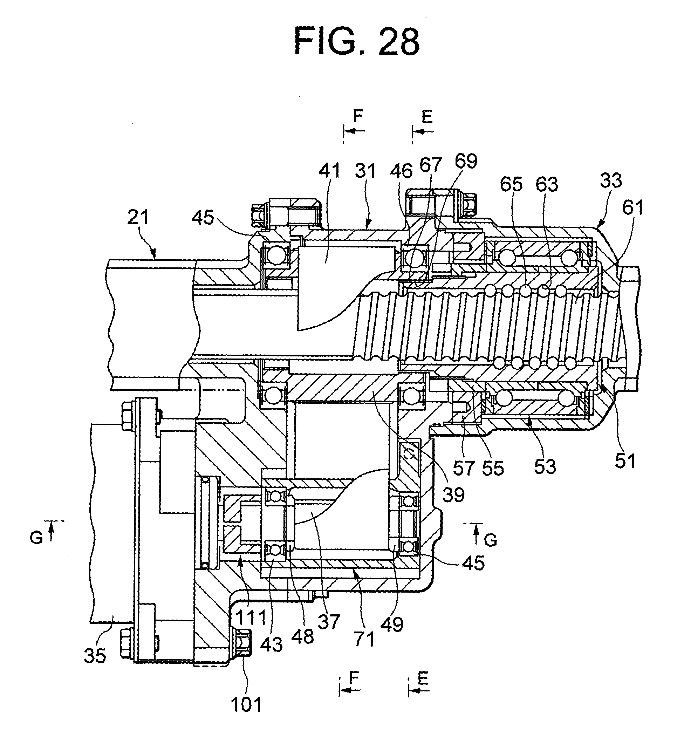

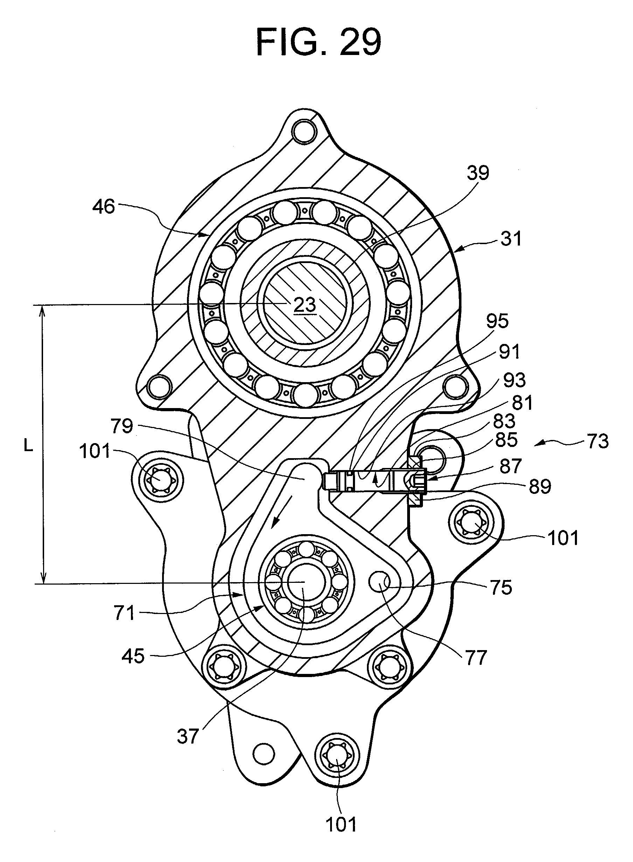

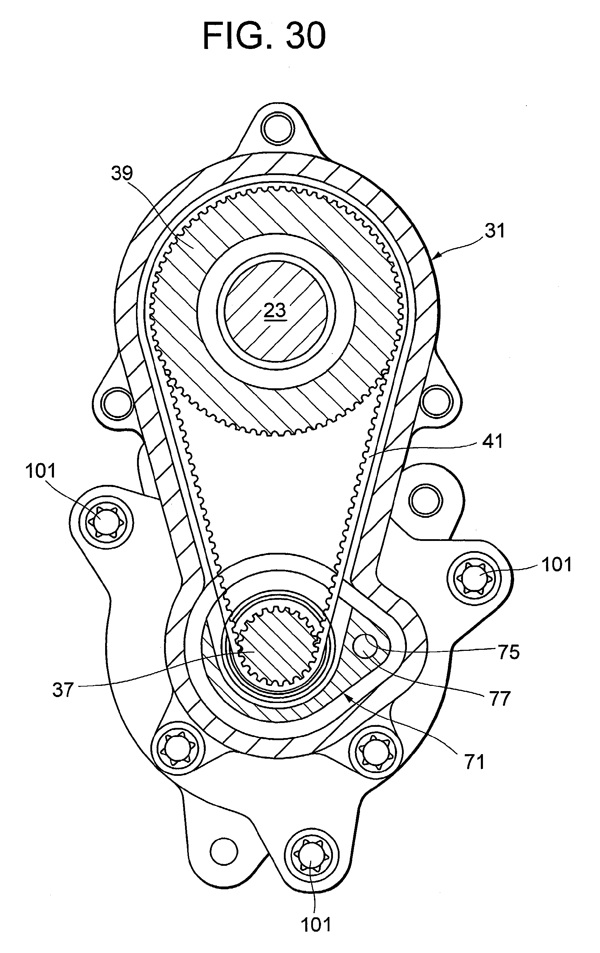

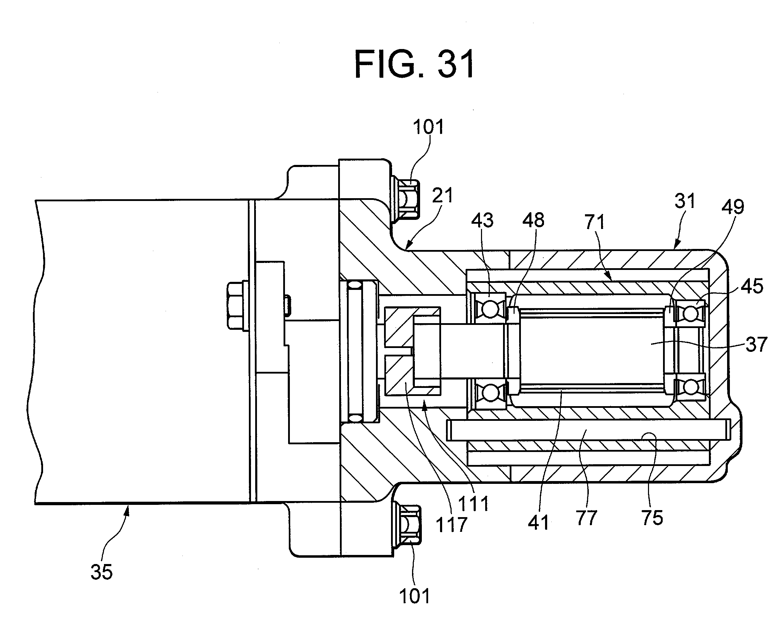

Fig. 28 is a cross sectional view showing the principal portion of a steering gear according to a modification of the second embodiment. Fig. 29 is a cross sectional view taken along line E-E in Fig. 28. Fig. 30 is a cross sectional view taken along line F-F in Fig. 28. Fig. 31 is a cross sectional view taken along line G-G in Fig. 28. As shown in these drawings, the overall structure of this modification is substantially the same as the above-described second embodiment, but differs from the second embodiment in the structure for connecting the shaft of the electric motor and the drive pulley and the mounting structure of the electric motor.

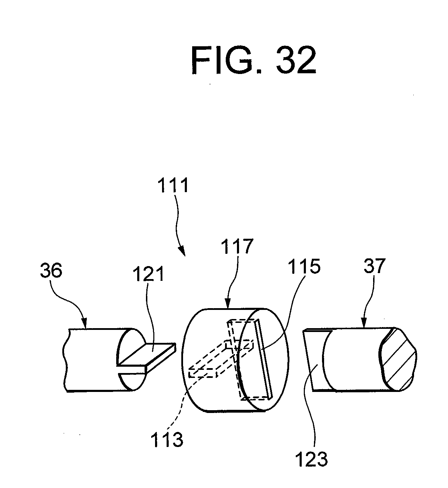

In this modification, the shaft 36 of the electric motor 35 is connected to the drive pulley 37 via an Oldham coupling 111. As shown in a perspective view presented as Fig. 32, the Oldham coupling 111 is composed of a slider 117 having key slots 113 and 115 with angular phase of 90° on both end faces, a shaft 36 and a drive pulley 37 having keys 121 and 123 slidably engaging the key slots 113 and 115. The electric motor 35 is secured to the rack and pinion housing 21 by bolts 101, and therefore it is not swung unlike that in the second embodiment.

With the above-described structure of the modification of the second embodiment, even if there is a misalignment between the shaft 36 of the electric motor 35 and the drive pulley 37, power transmission is achieved without significant transmission loss by virtue of sliding of the keys 121, 123 relative to the slider 117. Therefore, the assembly engineer need not to swing the electric motor 41 in adjusting the tension of the timing belt nor tightening the bolt 101 after tension adjustment.

Although in the second embodiment the pulley holder is driven by a screw mechanism, it may be driven by other mechanisms such as a cam mechanism. Furthermore, in the modification of the second embodiment, the Oldham coupling may be replaced by an elastic coupling or the like.

As per the above, according to the second embodiment of the present invention, it is possible to give a proper tension to the belt reliably and easily without using a tensioner or the like. Thus, the number of the constituent parts can be reduced, and smooth steering assist and prevention of damages of the timing belt can be realized.

Next, the third embodiment of the present invention will be described.

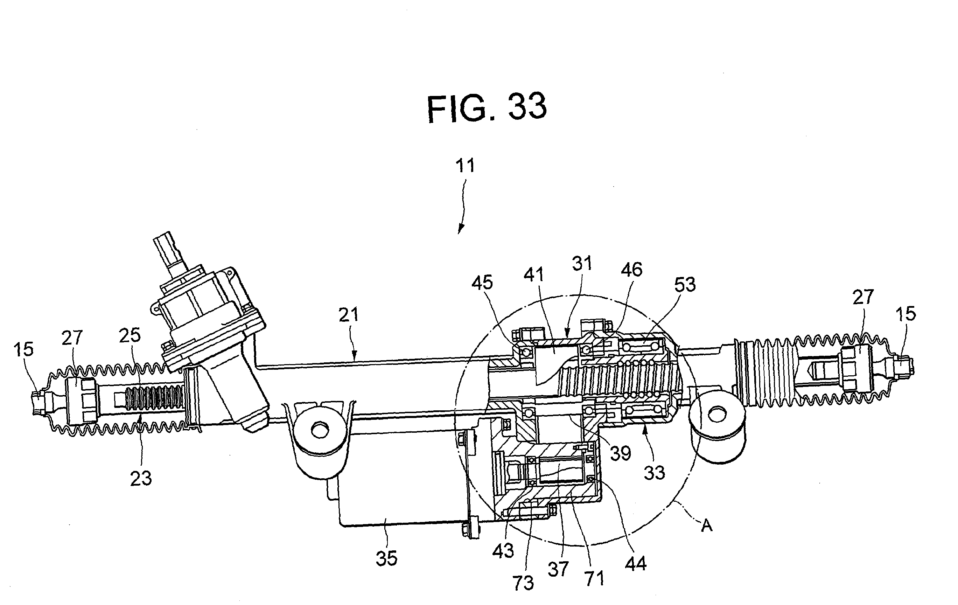

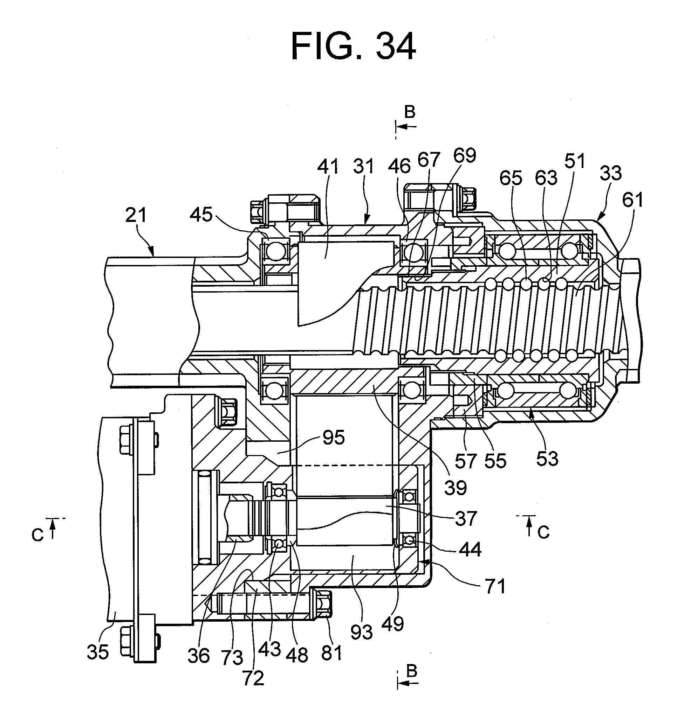

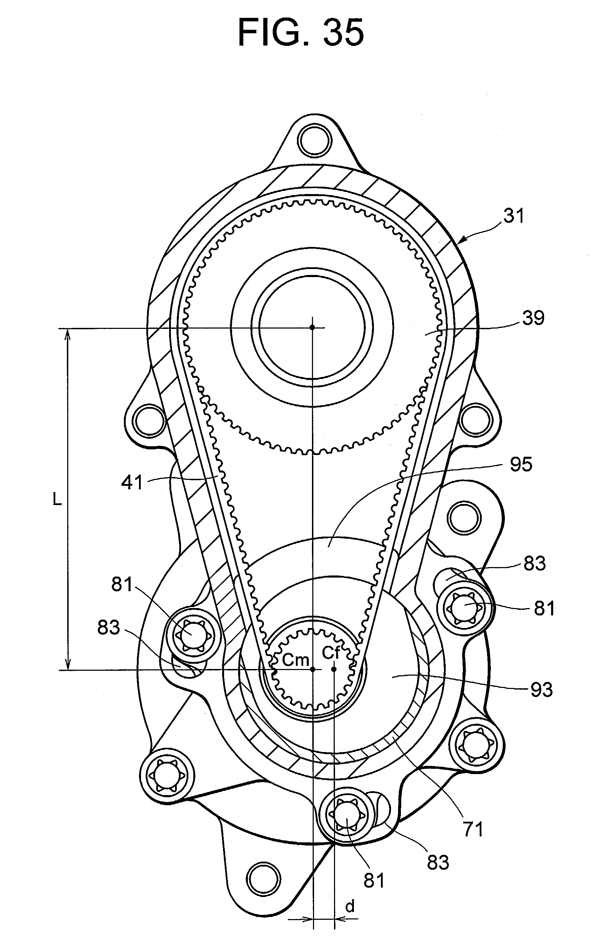

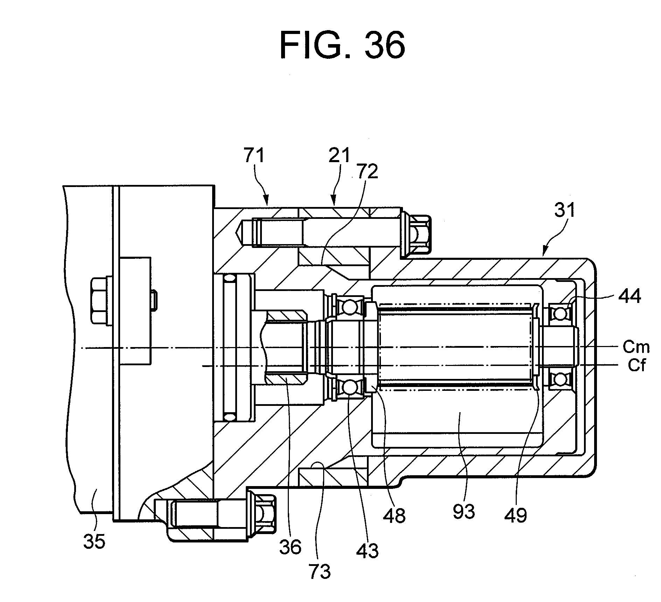

Fig. 33 is a longitudinal cross sectional view showing a steering gear according to the third embodiment. Fig. 34 is an enlarged view of part A in Fig. 33. Fig. 35 is a cross sectional view taken along line B-B in Fig. 34. Fig. 36 is a cross sectional view taken along line C-C in Fig. 34. Referring to Fig. 33, a rack shaft 23 and a pinion (not shown) that compose a rack and pinion mechanism are held in the interior of a rack and pinion housing 21 that constitutes a steering gear case. On the rack shaft 23, a rack 25 engaging the pinion is formed in the left side portion in Fig. 33. At the left and right ends (in Fig. 33) of the rack shaft 23, spherical joints 27 that support the tie rods 25 in a swingable manner are secured.

The outer hull of the power assist mechanism is composed of a belt housing 31 secured to the right side (in Figs. 33 and 34) of the rack and pinion housing 21 by bolts and a ball screw housing 33 secured to the right side (in Figs. 33 and 34) of the belt housing 31 by bolts and composing the steering gear case together with the rack and pinion housing 21 and the belt housing 31.

On the lower portion of the belt housing 31, an electric motor 35 is attached. The belt housing 31 accommodates a drive pulley 37 fixed to the shaft 36 of the electric motor 35, a hollow driven pulley 39 connected to a ball nut 51 that will be described later and a timing belt 41 looped around the drive pulley 37 and the driven pulley 39, which constitute a power transmission mechanism. As shown in Figs. 33 and 34, the drive pulley 37 is supported on a motor flange 71 (which will be described later) via prelubricated deep groove ball bearings (which will be simply referred to as bearings hereinafter) 43 and 44 as closed rolling bearings respectively. The driven pulley 39 is supported on the housings 21 and 31 via bearings 45 and 46 respectively. On both ends of the drive pulley 37, belt retaining flanges 48 and 49 are attached. In the case of this embodiment, as will be understood from Fig. 34, the interior space of the belt housing 31 is isolated from the ball screw mechanism and the rack shaft 23 by the driven pulley 39 and the bearings 45, 46 that serve as isolating means.

In the ball screw housing 33, a ball nut 51 is rotatably supported by means of a double row angular ball bearing 53. Referring to Figs. 33 and 34, the inner ring of the double row angular ball bearing 53 is fixed to the ball nut 51 by means of a ring nut 55, and the outer ring of the double row angular ball bearing 53 is fixed to the ball screw housing 33 by means of a ring bolt 57.

On the rack shaft 23, a male thread groove 61 is formed, while on the ball nut 51, a female thread groove 63 is formed, and a number of steel balls 65 serving as circulating balls are provided between the male thread groove 61 and the female thread groove 63. In addition, a circulation piece (not shown) for circulating the steel balls 65 is attached on the ball nut 51.

On the ball nut 51 side end portion of the driven pulley 39, a female spline 67 is formed, and a male spline 69 engaging the female spline 67 is formed on the ball nut 51. Thus, in the assembled state, the driven pulley 39 and the ball nut 51 rotate together.

At the end portion of the electric motor 35, a motor flange 71 having a substantially cylindrical shape is secured by bolts. The fitting portion 72 of the motor flange 71 is fitted inside a motor holding bore 73 formed in the rack and pinion housing 21.

The motor flange 71 is secured to the rack and pinion housing 21 and the belt housing 31 by three bolts 81. Since bolt holes 83 formed on the rack and pinion housing 21 and the belt housing 31 have an arc shape as shown in Fig. 35, the motor flange 71 can be revolved within a certain angular range relative to the motor holding bore 73. In addition, since the central axis Cf of the motor flange 71 is offset from the central axis Cm of the motor 35 by dimension d, when the angular phase of the motor flange 71 relative to the rack and pinion housing 21 is changed, the distance L between the center of the drive pulley 37 and the center of the driven pulley 39 also changes. In Fig. 35, reference sign 93 designates a belt accommodating portion in which the timing belt 41 is accommodated.

In the following, the operation of the third embodiment will be described.

When the driver turns the steering wheel 5, the rotational force is transmitted to the steering gear 11 via the upper steering shaft 3 and the lower steering shaft 9. Since the rack and pinion mechanism for converting rotational input into linear movement is provided in the steering gear 11, the rack shaft 23 is moved either to the left or right, so that the steering angle of the wheels is changed by means of the right and left tie rods 15 to achieve steering.

Simultaneously, in the power assist mechanism, the electric motor 35 rotates in the forward or backward direction with a predetermined running torque based on an output of a steering torque sensor (not shown). The rotation is transmitted, while reduced, through the drive pulley 37 and the driven pulley 39 to the ball nut 51 that spline engages the driven pulley 39. When the ball nut 51 rotates, a thrust force is exerted on the male thread groove 61 of the rack shaft 23 via the steel balls 65 engaging the female thread groove 63 of the ball nut 51. Thus, steering assist is achieved. In connection with this, in this embodiment, since the interior space of the belt housing 31 is isolated from the ball screw mechanism and the rack shaft 23, and the drive pulley 37 and the driven pulley 39 are supported by the prelubricated deep groove ball bearings 43-46, grease or the like for lubricating the ball screw mechanism, the rack shaft 23 and the bearings 43-46 will not fly to attach to the timing belt 41. Therefore, deterioration of the synthetic rubber material of the belt due to swelling can be prevented.

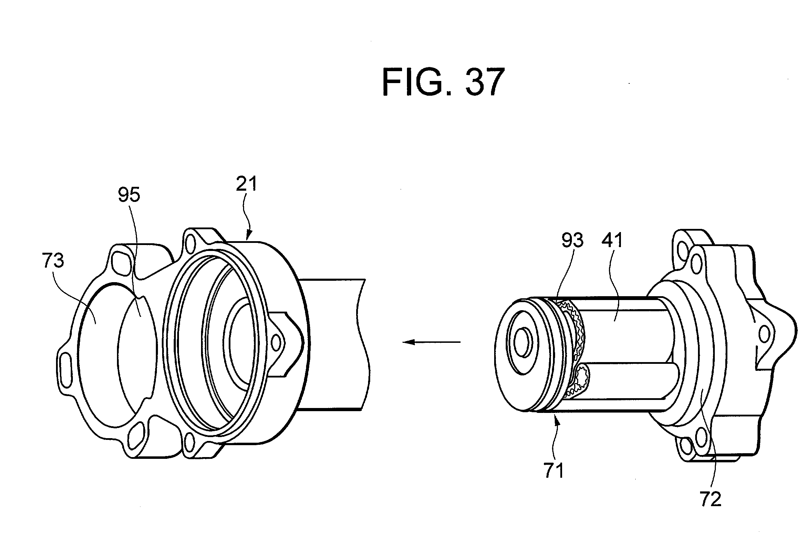

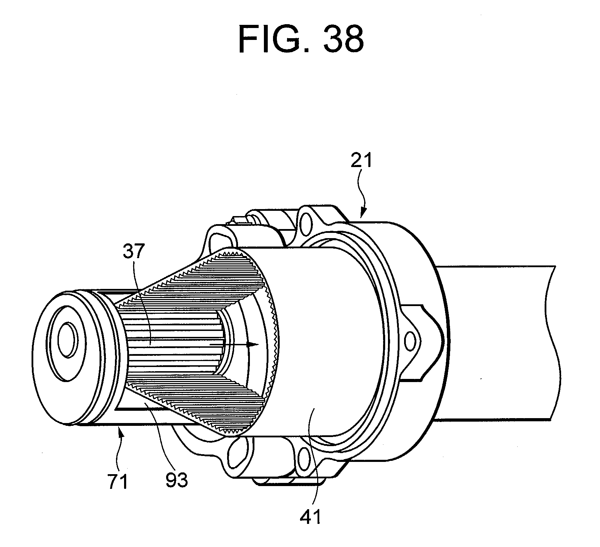

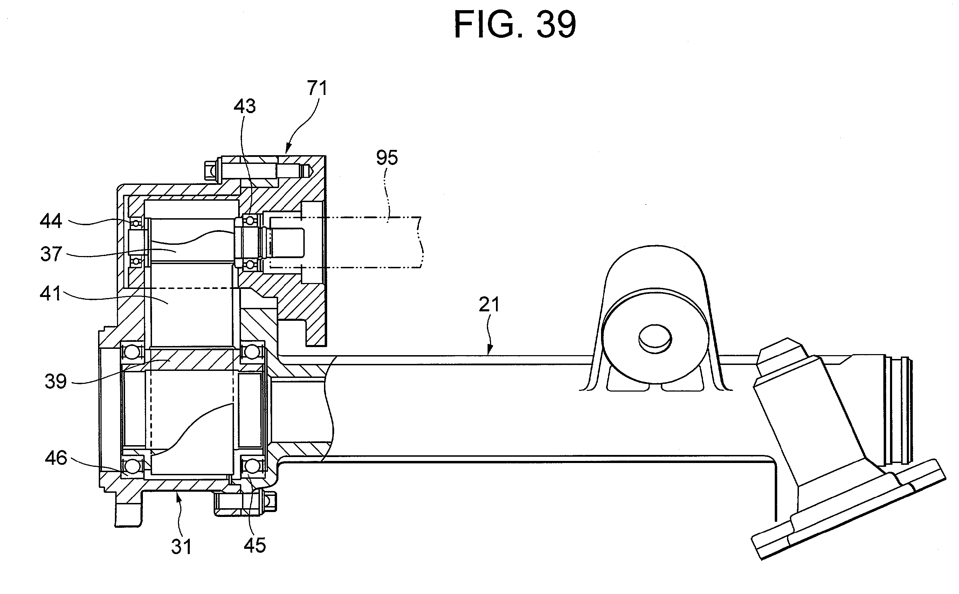

Next, the process of adjusting the tension of the timing belt 41 in the third embodiment will be described. In the assembly process of the steering gear 11 in the third embodiment, as shown in Fig. 37, the assembly engineer firstly fits the fitting portion 72 of the motor flange 71, on which parts such as the drive pulley 37 are attached and in which the timing belt 41 is accommodated in the folded state, into the motor holding bore 73 of the rack and pinion housing 21 from the right in the drawings (from the left, in Figs. 33 and 34). In the state in which the motor flange 71 extends beyond the rack and pinion housing 21, the assembly engineer pulls the timing belt 41 out from the belt accommodating portion 93 to unfold it as shown in Fig. 38, and then assembles the driven pulley 39 and the belt housing 31 as shown in Fig. 39. In this process, the assembly engineer does not tighten the bolts 81 fully so that the motor flange 71 can be revolved by a hand.

Next, the assembly engineer rotationally drives the drive pulley 37 using a running torque measuring device 95 to revolve the motor flange 71 until the drive resistance (or the running torque) thereof becomes equal to a prescribed value. In the case of the third embodiment, the friction in driving the power transmission mechanism is extremely small and the drive resistance is caused for the most part by the rotation resistance of the bearings 43 to 46. Therefore, if the relationship between the tension of the timing belt 41 and the drive resistance is determined in advance by experiments, it is possible to control the tension of the timing belt 41 quite accurately. In connection with this, the experiments may be performed using a known tension measuring process, such as the natural vibration frequency method or the pressing method. In the drive resistance measuring process, driven pulley 39 may be rotated instead of the drive pulley 37.

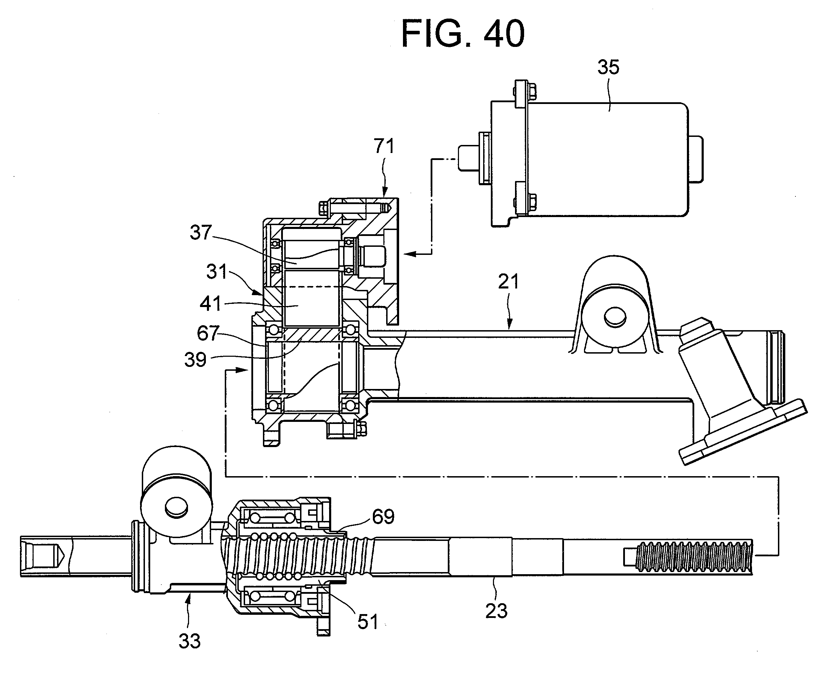

After completion of the adjustment of the tension of the timing belt 41, the assembly engineer tightens the bolts 81 with a predetermined tightening torque to secure the motor flange 71 to the rack and pinion housing 21 and the belt housing 31. Next, as shown in Fig. 40, the assembly engineer secures the electric motor 35 to the motor flange 71 and secures the ball screw housing 33 to the belt housing 31 to finish the process of assembling the steering gear 11. In connection with the above, members such as the rack shaft 23 and the ball nut 51 have been assembled to the ball screw housing 33 in advance in a different assembly line, and when the ball screw housing 33 is connected with the belt housing 31, the female spline 67 of the driven pulley 39 comes into engagement with the male spline 69 of the ball nut 51.

With the above-described structure of the third embodiment, the operation of adjusting the tension of the timing belt 41 can be made accurate and easy. In addition, since the power transmission mechanism and the ball screw mechanism can be assembled and adjusted independently from each other, the assembly process of the steering gear 11 can be made easy.

Although in the above-described third embodiment, a motor flange serving as an eccentric shaft is used as the timing belt tension adjusting means, the tension adjustment may be effected by a different member such as an idler pulley. The belt retaining flanges may be provided on both ends of the driven pulley, or may be provided on one end of the drive pulley and the other end of the driven pulley.

As per the above, in the electric power steering apparatus according the third embodiment of the present invention, the tension of the belt can be estimated based on the drive resistance or the like of the drive pulley or the driven pulley while operating the tension adjusting means in the state in which the ball screw housing has not been secured, and the steering gear can be assembled by, for example, securing the belt housing and the ball screw housing after completion of the tension adjustment. Thus, the operation of adjusting the tension of the belt can be performed accurately and easily.

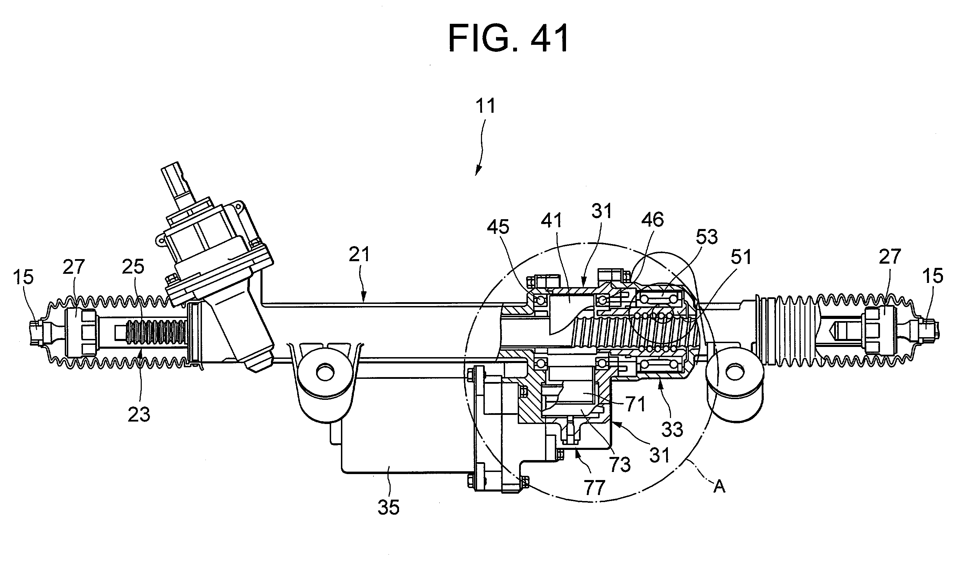

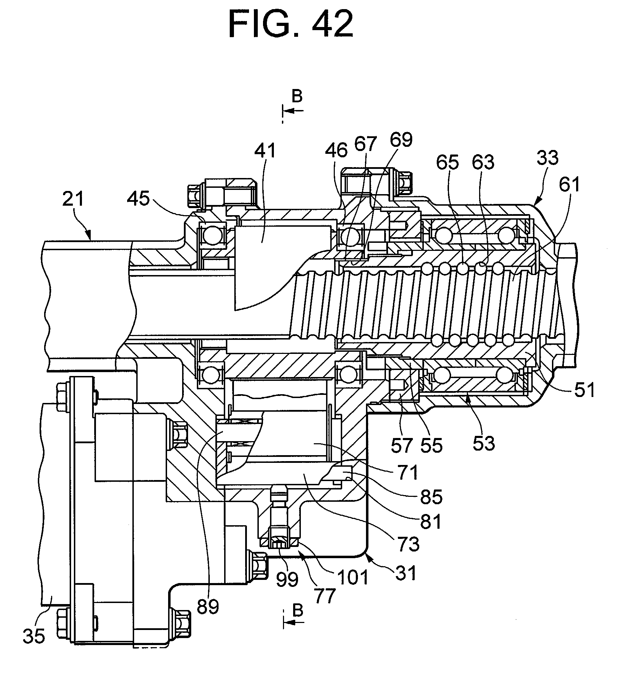

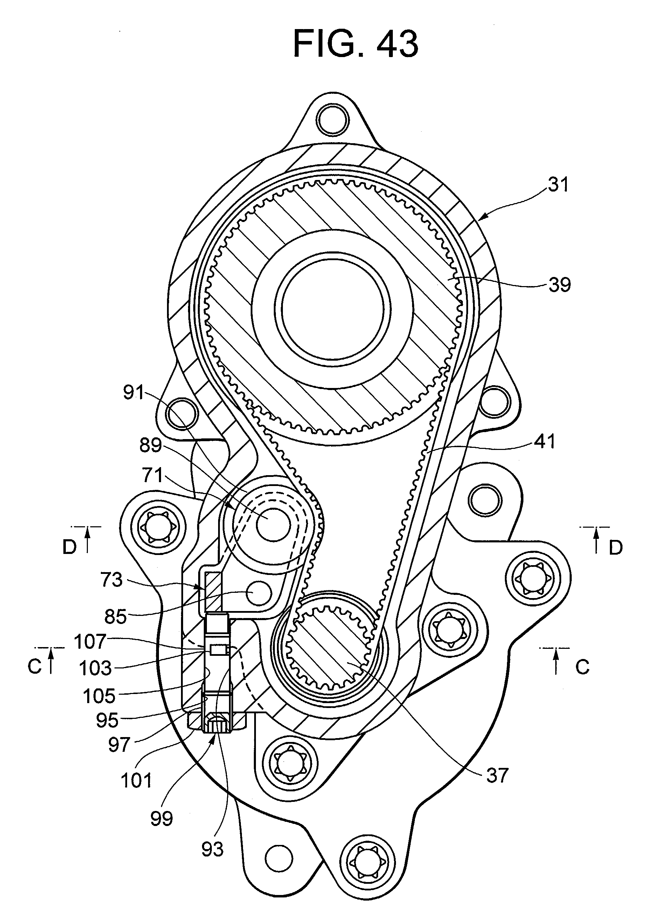

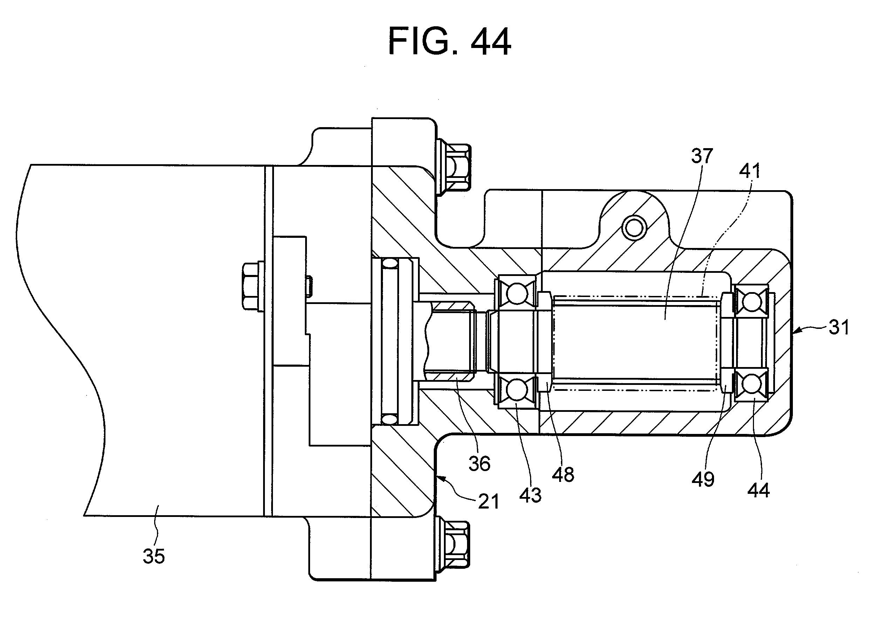

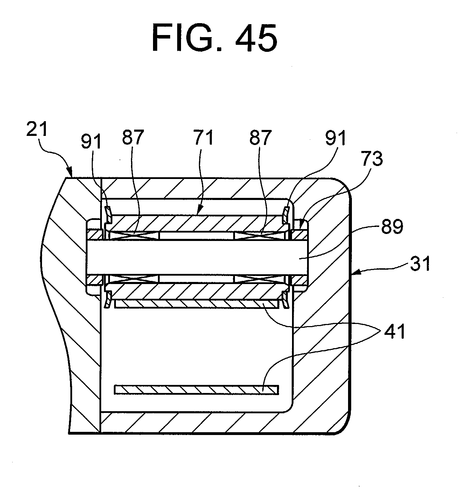

Fig. 41 is a longitudinal cross sectional view showing a steering gear 11 according to the fourth embodiment of the present invention. Fig. 42 is an enlarged view showing portion A in Fig. 41. Fig. 43 is a cross sectional view taken along line B-B in Fig. 3. Fig. 44 is a cross sectional view taken along line C-C in Fig. 43. Fig. 45 is a cross sectional view taken along line D-D in Fig. 43. The member designated by reference sign 21 in Fig. 41 is a rack and pinion housing that constitutes the steering gear case, which holds a rack shaft 23 and a pinion (not shown) that compose the rack and pinion mechanism. On the rack shaft 23, a rack 25 engaging the pinion is formed in the left side portion in Fig. 41. At the left and right ends (in Fig. 41) of the rack shaft 23, spherical joints 27 that support the tie rods 25 in a swingable manner are secured.

The outer hull of the power assist mechanism is composed of a belt housing 31 secured to the right side (in Figs. 41 and 42) of the rack and pinion housing 21 by bolts and a ball screw housing 33 secured to the right side (in Figs. 41 and 42) of the belt housing 31 by bolts and composing the steering gear case together with the rack and pinion housing 21 and the belt housing 31.

On the lower portion of the belt housing 31, an electric motor 35 is attached. The belt housing 31 accommodates a drive pulley 37 fixed to the shaft 36 of an electric motor 35, a hollow driven pulley 39 connected to a ball nut 51 that will be described later and a timing belt 41 looped around the drive pulley 37 and the driven pulley 39, which constitute a power transmission mechanism. As shown in Fig. 44, the drive pulley 37 is supported on the housings 21 and 31 via prelubricated deep groove ball bearings (which will be simply referred to as bearings hereinafter) 43 and 44 as closed rolling bearings respectively. As shown in Figs. 41 and 42, the driven pulley 39 is supported on the housings 21 and 31 via bearings 45 and 46 respectively. As shown in Fig. 44, on both ends of the drive pulley 37, belt retaining flanges 48 and 49 are attached. In the case of the fourth embodiment, as will be understood from Fig. 42, the interior space of the belt housing 31 is isolated from the ball screw mechanism and the rack shaft 23 by the driven pulley 39 and the bearings 45, 46 that serve as isolating means.

In the ball screw housing 33, a ball nut 51 is rotatably supported by means of a double row angular ball bearing 53. Referring to Figs. 41 and 42, the inner ring of the double row angular ball bearing 53 is fixed to the ball nut 51 by means of a ring nut 55, and the outer ring of the double row angular ball bearing 53 is fixed to the ball screw housing 33 by means of a ring bolt 57.

On the rack shaft 23, a male thread groove 61 is formed, while on the ball nut 51, a female thread groove 63 is formed, and a number of steel balls 65 serving as circulating balls are provided between the male thread groove 61 and the female thread groove 63. In addition, a circulation piece (not shown) for circulating the steel balls 65 is attached on the ball nut 51.

On the ball nut 51 side end portion of the driven pulley 39, a female spline 67 is formed, and a male spline 69 engaging the female spline 67 is formed on the ball nut 51. Thus, in the assembled state, the driven pulley 39 and the ball nut 51 rotate together.

In the belt housing 31, a tension roller 71 that is adapted to be moved back and forth relative to the web surface of the timing belt 41, a roller holder 73 rotatably holding the tension roller 71 and a roller pressing mechanism for pressing the tension roller 71 against the timing belt 41 are provided as tension adjusting means.

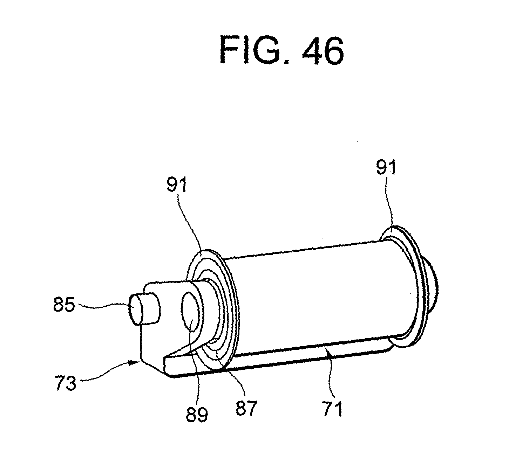

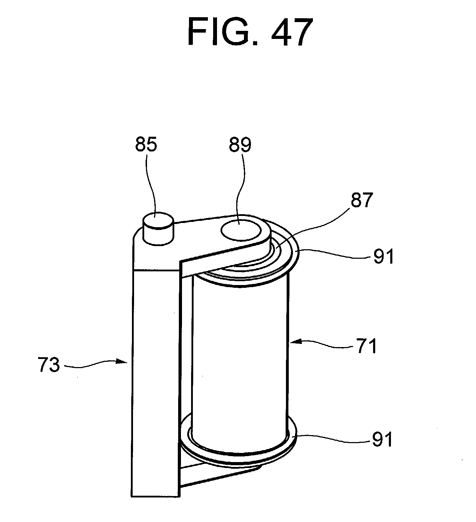

The roller holder 73 is rotatably supported on a swing shaft 85 fitly held in support holes 81 formed on the rack and pinion housing 21 and the belt housing 31. The roller holder 73 is a steel press formed part, and it supports a roller shaft 89 that supports the tension roller 71 by means of needle bearings 87 in such a way that the roller shaft 89 is rotatable and slidable in the axial direction within a certain range, as shown in Figs. 46 and 47 as perspective views. As shown in Figs. 46 and 47, belt retaining flanges 91, 91 are attached to both ends of the tension roller 71.

The roller pressing mechanism 77 is disposed below the roller holder 73 in Fig. 43 and composed of an adjust bolt 99 having a male thread portion 97 engaging a female thread portion 95 of an adjust bolt holding hole 93 formed on the belt housing 31 and a lock nut 101 that serves to prevent loosening. The tip end of the adjust bolt 99 is in contact with the approximately axial central portion of the roller holder 73, and when turned in the tightening direction, it advances to swing the roller holder 73. At the tip end side of the adjust bolt 99, an annular groove 103 is formed. An O-ring 107 to be in pressure contact with a guide portion 105 of the adjust bolt holding hole 93 is fitted in the annular groove 103.

In the following, the operation of the fourth embodiment will be described.

When the driver turns the steering wheel 5, the rotational force is transmitted to the steering gear 11 via the upper steering shaft 3 and the lower steering shaft 9. Since the rack and pinion mechanism for converting rotational input into linear movement is provided in the steering gear 11, the rack shaft 23 is moved either to the left or right, so that the steering angle of the wheels is changed by means of the right and left tie rods 15 to achieve steering.

Simultaneously, in the power assist mechanism, the electric motor 35 rotates in the forward or backward direction with a predetermined running torque based on an output of a steering torque sensor (not shown). The rotation is transmitted, while reduced, through the drive pulley 37 and the driven pulley 39 to the ball nut 51 that spline engages the driven pulley 39. When the ball nut 51 rotates, a thrust force is exerted on the male thread groove 61 of the rack shaft 23 via the steel balls 65 engaging the female thread groove 63 of the ball nut 51. Thus, steering assist is achieved.

In connection with this, in the fourth embodiment, since the belt retaining flanges 91 are provided at both end portions of the tension roller 71 for giving tension to the timing belt 41, and the tension roller 71 is movable in the axial direction, problems such as dislocation of the timing belt 41 from the tension roller 71 or meandering of the timing belt 41 due to displacement of the tension roller 71 will not occur.

In addition, in the fourth embodiment, since the interior space of the belt housing 31 is isolated from the ball screw mechanism and the rack shaft 23, and the drive pulley 37 and the driven pulley 39 are supported by the prelubricated deep groove ball bearings 43-46, grease or the like for lubricating the ball screw mechanism, the rack shaft 23 and the bearings 43-46 will not fly to attach to the timing belt 41. Therefore, deterioration of the synthetic rubber material of the belt due to swelling can be prevented.

Next, the process of adjusting the tension of the timing belt 41 in the fourth embodiment will be described. In this fourth embodiment, the assembly engineer turns the adjust bolt 99 in the tightening direction with a tool such as a hexagonal wrench to swing the roller holder 73 in the clockwise direction in Fig. 43, whereby the tension roller 71 held by the roller holder 73 is pressed against the web surface of the timing belt 41 from the left in Fig. 43. Thus, the timing belt 41 is bent inwardly, so that a tension is given to the timing belt 41.

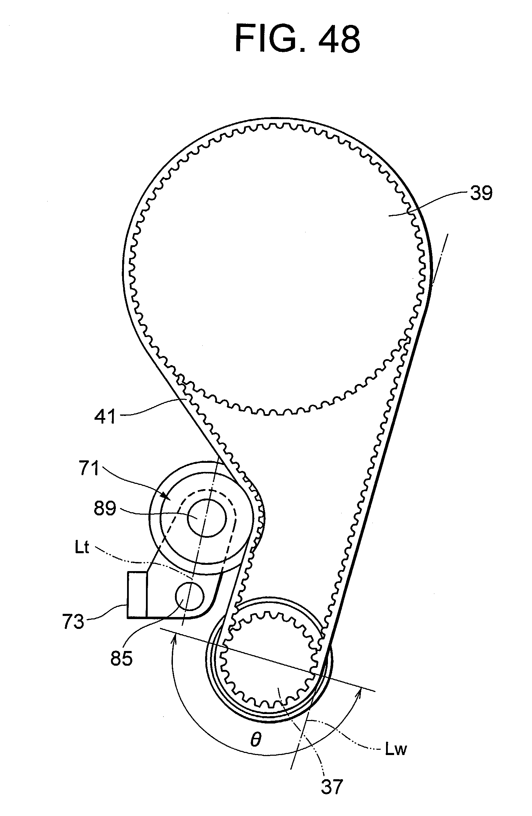

In this process, as shown in Fig. 48, the line Lt connecting the central axis of the tension roller 71 and the swing shaft 85 is substantially parallel to the side of the web of the timing belt that is not pressed by the tension roller (the line of this web is indicated by "Lw" in Fig. 48). Therefore, the direction in which the tension roller 71 is moved with the swing of the roller holder 73 is substantially perpendicular to the timing belt 41. Thus, the tension roller is pressed against the timing belt effectively with a relatively small swing.

After confirming that the tension of the timing belt has become a proper value based on the tightening torque of the adjust bolt 99, the assembly engineer tightens the lock nut 101 to prevent loosening of the adjust bolt 99. As shown in Fig. 48, after the tension adjustment, the timing belt 41 is looped with a large wrapping angle θ (i.e. 180°, in the case of the illustrated example), and the shear stress acting thereon is made small. Therefore, damages of the timing belt 41 are unlikely to occur even if it runs for a long time.

Although in the fourth embodiment the structure in which a roller holder supported in a swingable manner is pressed by a screw mechanism is adopted as the timing belt tension adjusting means, a linearly movable roller holder or a roller holder driven by a cam mechanism may be used.

According to the electric power steering apparatus according to the fourth embodiment of the present invention, in the rack assist type electric power steering apparatus including a ball screw mechanism composed of a ball nut having a female thread groove formed on its inner circumferential surface, a rack shaft disposed at the central axis of the ball nut and having a male thread groove that is opposed to said female thread groove, formed on its outer circumferential surface and a plurality of circulating balls disposed between said female thread groove and said male thread groove, an electric motor disposed non-coaxially with said rack shaft for driving said ball nut mechanism, power transmission means composed of a drive pulley rotating integrally with the shaft of the electric motor, a driven pulley rotating integrally with said ball nut and a belt looped around the drive pulley and the driven pulley, a tension adjusting means for adjusting the tension of said belt, and a steering gear case for accommodating said ball screw mechanism and said power transmission means, said tension adjusting means has a tension roller that is rotatably supported by a roller holder disposed outside said belt and adapted to be moved back and forth relative to a web surface of said belt together with the roller holder, and when the tension roller is pressed against the outer surface of the belt, the wrapping angle of the belt on both the pulleys is increased, so that the shear stress of the belt at the pulley having the relatively smaller diameter is reduced. Thus, the durability of the belt is enhanced.

Although the description of the specific embodiments has been made, modes of the present invention are not limited to the above-described embodiments. For example, although in the above two embodiments, the present invention is applied to arrangements in which a timing belt is used in the power transmission mechanism, the present invention may also be applied to arrangements in which a V-belt or a flat belt is used. Furthermore, the closed rolling bearing may be a bearing other than the prelubricated deep groove ball bearing. Besides the above, the overall structure of the steering gear and the specific structure of the power assist mechanism and the ball screw mechanism are not limited to the illustrative examples in the above-described embodiments, but they can be modified fitly in accordance with requirements of design or specifications without departing from the spirit and scope of the present invention.

## Claims

1. A rack assist type electric power steering apparatus comprising:
a ball screw mechanism including a ball nut having a female thread groove formed on its inner circumferential surface, a rack shaft disposed at the central axis of the ball nut and having a male thread groove that is opposed to said female thread groove, formed on its outer circumferential surface and a plurality of circulating balls disposed between said female thread groove and said male thread groove;
an electric motor disposed non-coaxially with said rack shaft for driving said ball nut mechanism;
power transmission means including a drive pulley rotating integrally with the shaft of the electric motor, a driven pulley rotating integrally with said ball nut and a belt looped around the drive pulley and the driven pulley; and
a steering gear case for accommodating said power transmission means and said ball screw mechanism;
wherein there is provided a motor flange fixed to an end portion of said electric motor and having a cylindrical shape to be fitted inside a motor holding bore formed in said steering gear case; and
said motor flange rotatably supports said drive pulley and is adapted to rotate relative to said motor holding bore within a predetermined angle range, and the central axis of the motor flange is offset from the central axis of said electric motor.

2. An electric power steering apparatus according to claim 1, wherein a belt retaining flange is formed on at least one of said drive pulley and said driven pulley.

3. An electric power steering apparatus according to claim 1 or 2, wherein said motor flange is separated into two parts along the axial direction.

4. An electric power steering apparatus according to claim 1 or 2, wherein said motor flange is provided with a belt accommodating portion for accommodating the belt in a folded state during an assembling operation.

5. An electric power steering apparatus according to claim 4, wherein said motor holding bore is annexed with a belt passing portion for allowing the belt projecting from the belt accommodating portion to pass through.

6. An electric power steering apparatus according to claim 4, wherein the belt accommodated in said belt accommodating portion is folded in a state in which the belt is prevented from assuming a curvature smaller than a predetermined curvature by curvature regulation means.

7. An electric power steering apparatus according to claim 5, wherein the belt accommodated in said belt accommodating portion is folded in a state in which the belt is prevented from assuming a curvature smaller than a predetermined curvature by curvature regulation means.

8. An electric power steering apparatus according to claim 1 or 2, wherein a power transmission means accommodating portion for accommodating said power transmission means and a ball screw mechanism accommodating portion for accommodating said ball screw mechanism are isolated by isolation means, and said belt is supported by a closed rolling bearing.

9. A rack assist type electric power steering apparatus comprising:
a ball screw mechanism including a ball nut having a female thread groove formed on its inner circumferential surface, a rack shaft disposed at the central axis of the ball nut and having a male thread groove that is opposed to said female thread groove, formed on its outer circumferential surface and a plurality of circulating balls disposed between said female thread groove and said male thread groove;
an electric motor disposed non-coaxially with said rack shaft for driving said ball screw mechanism;
power transmission means including a drive pulley connected to the shaft of the electric motor, a driven pulley rotating integrally with said ball nut and a belt looped around the drive pulley and the driven pulley; and
a steering gear case for accommodating said ball screw mechanism and said power transmission means;
wherein there is provided tension adjusting means for adjusting the tension of said belt; and
said tension adjusting means includes a pulley holder rotatably supporting said drive pulley and held in said steering gear case in a swingable manner and holder angle adjusting means for adjusting the swing angle of said pulley holder.

10. An electric power steering apparatus according to claim 9, wherein said holder angle adjusting means comprises a screw mechanism.

11. An electric power steering apparatus according to claim 9 or 10, wherein the shaft of said electric motor and said drive pulley are connected by misalignment absorbing means.

12. An electric power steering apparatus according to claim 11, wherein said misalignment absorbing means comprises an Oldham coupling.

13. An electric power steering apparatus according to claim 9 or 10, wherein a belt retaining flange is formed on at least one of said drive pulley and said driven pulley.

14. An electric power steering apparatus according to claim 9 or 10, wherein said steering gear case comprises a belt housing for accommodating said power transmission means and a ball screw housing secured to said belt housing for accommodating said ball screw mechanism, and said driven pulley and said ball nut are spline connected.

15. An electric power steering apparatus according to claim 9 or 10, wherein a power transmission means accommodating portion for accommodating said power transmission means and a ball screw mechanism accommodating portion for accommodating said ball screw mechanism are isolated by isolation means, and said belt is supported by a closed rolling bearing.

16. A rack assist type electric power steering apparatus comprising:
a ball screw mechanism including a ball nut having a female thread groove formed on its inner circumferential surface, a rack shaft disposed at the central axis of the ball nut and having a male thread groove that is opposed to said female thread groove, formed on its outer circumferential surface and a plurality of circulating balls disposed between said female thread groove and said male thread groove;
an electric motor disposed non-coaxially with said rack shaft for driving said ball nut mechanism;
power transmission means including a drive pulley rotating integrally with the shaft of the electric motor, a driven pulley rotating integrally with said ball nut and a belt looped around the drive pulley and the driven pulley; and
a steering gear case for accommodating said ball screw mechanism and said power transmission means;
wherein said electric power steering apparatus further comprises tension adjusting means for adjusting the tension of said belt; and
said steering gear case includes a belt housing for accommodating said power transmission means and a ball screw housing secured to said belt housing for accommodating said ball screw mechanism.

17. An electric power steering apparatus according to claim 16, wherein said driven pulley and said ball nut are spline connected.

18. An electric power steering apparatus according to claim 16 or 17, wherein a belt retaining flange is formed on at leas one of said drive pulley and said driven pulley.

19. An electric power steering apparatus according to claim 16 or 17, wherein the tension of said belt is measured based on the running torque of said drive pulley or said driven pulley.

20. An electric power steering apparatus according to claim 16 or 17, wherein said tension adjusting means is adapted to change the distance between the center of said drive pulley and the center of said driven pulley.

21. An electric power steering apparatus according to claim 16 or 17, wherein a power transmission means accommodating portion for accommodating said power transmission means and a ball screw mechanism accommodating portion for accommodating said ball screw mechanism are isolated by isolation means, and said belt is supported by a closed rolling bearing.

22. A rack assist type electric power steering apparatus comprising:
a ball screw mechanism including a ball nut having a female thread groove formed on its inner circumferential surface, a rack shaft disposed at the central axis of the ball nut and having a male thread groove that is opposed to said female thread groove, formed on its outer circumferential surface and a plurality of circulating balls disposed between said female thread groove and said male thread groove;
an electric motor disposed non-coaxially with said rack shaft for driving said ball nut mechanism;
power transmission means including a drive pulley rotating integrally with the shaft of the electric motor, a driven pulley rotating integrally with said ball nut and a belt looped around the drive pulley and the driven pulley; and
a steering gear case for accommodating said ball screw mechanism and said power transmission means,
wherein said electric power steering apparatus comprises tension adjusting means for adjusting the tension of said belt, and
said tension adjusting means includes a tension roller rotatably held by a roller holder disposed outside said belt, said tension roller being adapted to be moved back and forth relative to a web surface of said belt together with said roller holder, and a roller pressing means for pressing said tension roller against said belt.

23. An electric power steering apparatus according to claim 22, wherein said roller holder is adapted to swing about a swing shaft as a supporting point.

24. An electric power steering apparatus according to claim 22 or 23, wherein said roller pressing means comprises a screw mechanism.

25. An electric power steering apparatus according to claim 23, wherein in the state in which said power transmission means is assembled, a line connecting the center axis of said tension roller and said swing axis is substantially parallel to the side of the web of said belt that is not pressed by said tension roller.

26. An electric power steering apparatus according to claim 24, wherein in the state in which said power transmission means is assembled, a line connecting the center axis of said tension roller and said swing axis is substantially parallel to the side of the web of said belt that is not pressed by said tension roller.

27. An electric power steering apparatus according to claim 23, wherein belt retaining flanges for regulating axial displacement of said belt are formed at both ends of said tension roller, and said tension roller is movable within a predetermined movement range.

28. An electric power steering apparatus according to claim 24, wherein belt retaining flanges for regulating axial displacement of said belt are formed at both ends of said tension roller, and said tension roller is movable within a predetermined movement range.

29. An electric power steering apparatus according to claim 23, wherein said roller holder is a press formed part.

30. An electric power steering apparatus according to claim 24, wherein said roller holder is a press formed part.

31. An electric power steering apparatus according to claim 23, wherein a power transmission means accommodating portion for accommodating said power transmission means and a ball screw mechanism accommodating portion for accommodating said ball screw mechanism are isolated by isolation means, and said belt is supported by a closed rolling bearing.

32. An electric power steering apparatus according to claim 24, wherein a power transmission means accommodating portion for accommodating said power transmission means and a ball screw mechanism accommodating portion for accommodating said ball screw mechanism are isolated by isolation means, and said belt is supported by a closed rolling bearing.

33. A rack assist type electric power steering apparatus comprising:
a ball screw mechanism having a rack shaft and a ball nut, the ball screw mechanism supporting the rack shaft in such a way that the rack shaft can be moved in the axial direction by rotation of the ball nut;
an electric motor disposed non-coaxially with said rack shaft for driving said ball nut mechanism;
power transmission means including a drive pulley rotating integrally with the shaft of the electric motor, a driven pulley rotating integrally with said ball nut and a belt looped around the drive pulley and the driven pulley;
a steering gear case for accommodating said power transmission means and said ball screw mechanism; and
a motor supporting member for fixedly supporting said electric motor on said steering gear case,
wherein said motor supporting member rotatably supports said drive pulley and is fixed to said steering gear case in such a way that its position can be adjusted.

34. A rack assist type electric power steering apparatus comprising:
a ball screw mechanism having a rack shaft and a ball nut, the ball screw mechanism supporting the rack shaft in such a way that the rack shaft can be moved in the axial direction by rotation of the ball nut;
an electric motor disposed non-coaxially with said rack shaft for driving said ball nut mechanism;
power transmission means including a drive pulley rotating integrally with the shaft of the electric motor, a driven pulley rotating integrally with said ball nut and a belt looped around the drive pulley and the driven pulley; and
a housing for supporting said ball screw mechanism and said electric motor,
wherein a pulley support member for rotatably supporting said drive pulley is fixed to said housing as a separate part in such a way that the pulley supporting member allows adjustment of the tension of said belt and its position can be adjusted.

35. An electric power steering apparatus comprising:
a steering shaft;
a rack shaft having rack teeth;
a rack and pinion housing for supporting a rack and pinion mechanism that converts rotation of the steering shaft into linear movement of the rack shaft;
a ball screw mechanism having a ball nut, for supporting said rack shaft in such a way as to aid the linear movement of said rack shaft by rotation of the nut;
a ball screw mechanism housing for supporting the ball screw mechanism;
an electric motor;
a drive pulley rotating integrally with the shaft of the electric motor,
a driven pulley rotating integrally with said ball nut;
a belt looped around the drive pulley and the driven pulley;
a motor supporting member rotatably supporting said drive pulley, for securely supporting said electric motor on said rack and pinion housing; and
a belt housing for covering said belt,
wherein said motor supporting member is fixed to said rack and pinion housing in such a way that its position can be adjusted.
